(19) **Europäisches Patentamt / European Patent Office / Office européen des brevets**

(11) **EP 1 269 690 B1**

(12) **EUROPEAN PATENT SPECIFICATION**

(45) Date of publication and mention
of the grant of the patent:
**12.11.2008 Bulletin 2008/46**

(51) Int Cl.:
***H04L 12/28*** (2006.01)   ***H04L 12/56*** (2006.01)

(21) Application number: **01925488.7**

(86) International application number:
**PCT/EP2001/003140**

(22) Date of filing: **19.03.2001**

(87) International publication number:
**WO 2001/076145 (11.10.2001 Gazette 2001/41)**

(54) **NETWORK CONTROLLER AND COMMUNICATION SYSTEM FOR PERFORMING PACKET DATA TRANSFER WITH REDUCED DELAY**

NETZCONTROLLER UND KOMMUNIKATIONSSYSTEM FÜR DAS DURCHFÜHREN VON PACKETDATENÜBERTRAGUNG MIT VERRINGERTER VERZÖGERUNG

UNITE DE COMMANDE DE RESEAU ET SYSTEME DE COMMUNICATION DESTINES A EFFECTUER UN TRANSFERT DE PAQUET DE DONNEES AVEC UN RETARD REDUIT

(84) Designated Contracting States:
**AT BE CH CY DE DK ES FI FR GB GR IE IT LI LU MC NL PT SE TR**

(30) Priority: **31.03.2000 EP 00106924**

(43) Date of publication of application:
**02.01.2003 Bulletin 2003/01**

(73) Proprietor: **TELEFONAKTIEBOLAGET LM ERICSSON (publ)**
**164 83 Stockholm (SE)**

(72) Inventors:
• **SCHIEDER, Andreas**
**52134 Herzogenrath (DE)**
• **LEY, Tobias**
**52066 Aachen (DE)**

(74) Representative: **Kribber, Klaus-Dieter et al**
**Ericsson GmbH**
**Ericsson Allee 1**
**52134 Herzogenrath (DE)**

(56) References cited:
**EP-A- 0 917 317**      **WO-A-99/35876**
**US-A- 5 006 983**

**Description**

**FIELD OF THE INVENTION**

The invention relates to a network controller and a communication system for performing a packet data transfer on a connection between a subscriber terminal side and a network side. The communication system can comprise a packet data communication system only or a packet data communication system connected to a circuit switched communication system.

In such a communication system a physical connection is maintained during a data packet transfer which in principle indicates in the subscriber terminal side and in the network side that the subscriber terminal and the network side are valid for performing a packet data transfer. A data packet transfer can only be performed if the physical connection is established.

The present invention in particular addresses the problem to avoid empty transmitter queues in the subscriber terminal side leading to unnecessary physical connection releases during a data packet transfer from the subscriber terminal side to the network side, especially during active periods of real-time applications, and high transmission delay times.

**BACKGROUND OF THE INVENTION**

Although the invention is of course not limited to any particular type of communication system comprising a packet data communication network or a circuit switched communication network and a packet switched communication network in combination, the background of the invention can most easily be understood by reference to the GPRS (General Packet Radio Service) system in GSM (Global System for Mobile Communication). GPRS is a new packet switched service which is standardized by ETSI.

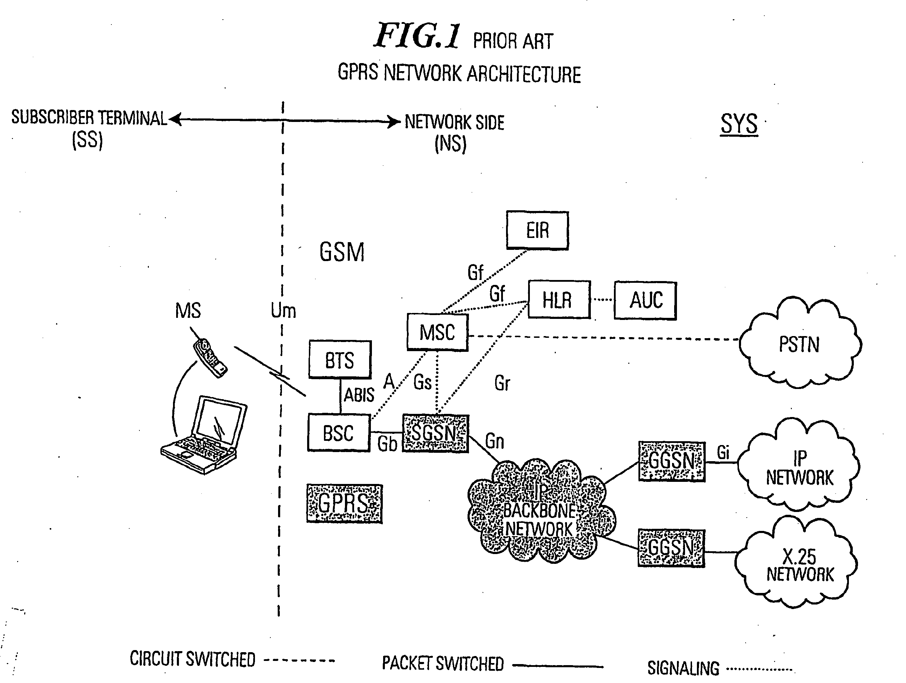

As shown in Fig. 1, a communication system SYS incorporating a GPRS network architecture comprises for the conventional circuit switched mobile communication network the well-known entities of e.g. a mobile switching centre MSC, a base transceiver station BTS, a base station controller BSC, a home location register HLR etc. wherein the mobile switching centre MSC may be connected to a conventional public switched telephone network PSTN.

The GPRS architecture (illustrated with grey shading) introduces new packet switching functionalities in the existing GSM architecture. According to the GSM specifications a new node SGSN (Serving GPRS Support Node) is provided which is interfaced via interfaces Gb, Gs, Gr with the base station controller BSC, the mobile switching centre MSC and the home location register HLR. Via the SGSN node an IP backbone network can be accessible in the conventional mobile communication network. By means of additional nodes GGSN (Gateway GPRS Support node) an IP network or X.25 network can for example be connected to the IP backbone network.

In Fig. 1 the dotted lines denote an exchange of signalling messages, the dashed lines denote a circuit switched connection and the solid lines denote a packet switched connection.

The existing GSM data services (9.6 k-bit/s packet switched) and a newly standardized High Speech Circuit Switched Data HSCSD and GPRS with data rates up to 114 k-bit/s are based on a Gaussian Minimum Shift Keying (GMSK) Modulation Scheme. To be able to have even higher bit rates a 8-Phase Shift-Keying (PSK) modulation scheme is introduced with an advanced standard, called the EDGE standard, which can boost the available data rate up to 384 k-bit/s (EDGE: enhanced Data Rate for GSM Evolution). A new extension called EGPRS (Enhanced General Packet Radio System) is considered as the migration from the second generation mobile network to the third generation Wideband Code Division Multiplex Access (WCDMA) networks. As shown in Fig. 1, GPRS provides a packet switched transmission service to transport data in a mobile environment. This packet oriented data service for GSM supports protocols like X.25 and IP as level 3 protocols and therefore is suitable to work as air link for the access to the IP based Internet. Another advantage in respect of Internet application in the mobile communication network via GPRS is that a packet oriented service no longer needs a costly online connection applying time based charging but enables volume based charging.

In the system in Fig. 1 the aim is that the communication system SYS shall be able to support all existing applications via packet switched links, including voice and video but should also support application with bursty traffic, such as Internet applications whose bursty nature requires efficient multiplexing on the GSM time slot (TS). The idea is to build a unified network based on IP providing service flexibility and independence of applications and the network.

In particular due to the time critical nature of speech transmission it is important to meet the tight quality of service requirements of real time traffic. For example, in real time applications as VoIP (Voice over Internet Protocol) over GPRS and EGPRS, the end-to-end delay time of the transfer of data packets is an important aspect, since for example a high delay time might sound like a speech pause at the receiving end. Therefore, in particular for real time applications special provisions regarding the maximum delay time must be made.

## PROTOCOL STRUCTURE

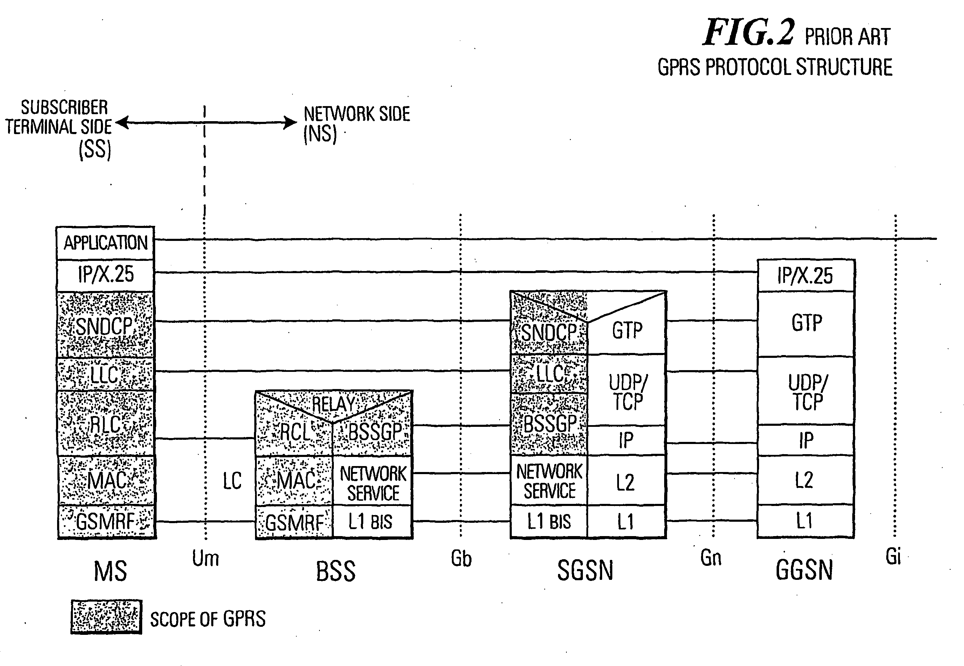

In Fig. 2 the GPRS protocol structure for the communication network SYS in Fig. 1 is shown. MS is the protocol stack of the mobile station or subscriber terminal, more generally of a communication station. BSS is the base station system and SGSN and GGSN are the same nodes as explained above with reference to Fig. 1. It should be noted that a full description of this protocol structure is contained in the ETSI standard GSM 3.60 and hereinafter only those portions of the protocol structure are explained which are relevant for the present invention.

As shown in Fig. 2 the medium access layer MAC and the radio link layer RLC operate above the physical link layer. The MAC layer provides the multiplexing of several mobile stations MS on the time slot structure of GSM. The MAC layer arbitrates multiple mobile stations attempting to allocate resources and transmitting simultaneously. The operations of the MAC functions allow a single mobile station to use more than one time slot (TS) simultaneously. The number of allowed parallely used time slots TS in a single TDMA frame is determined by the time slot capabilities of the mobile station. Hereinafter, these capabilities are called "multislot capability". Each mobile station is thus given a certain amount of time slots TS for use, ranging from multislot capability 1 (only 1 time slot TS) up to multislot capability 8 (all 8 time slots TS in the TDMA frame).

The GRPRS MAC layer is responsible for providing efficient multiplexing of data and control signalling on the uplink and downlink connections. The multiplexing on the downlink is controlled by a so-called downlink scheduler which has knowledge of the active mobile stations in the system and of the downlink traffic. Therefore, an efficient multiplexing on the timeslots TS can be made. On the uplink, the multiplexing is controlled by medium allocation to individual users. This is done by resource requests, which are sent by the mobile station to the network which then has to schedule the time slot TS on the uplink.

The GPRS RLC function provides the interface towards the LLC (LLC: Logical Link Control) layer, especially the segmentation and re-assembly of LLC-PDUs (PDU: Packet Data Units) into RLC data blocks depending on the used coding scheme (CS).

The procedures of the medium access layer MAC in the mobile station (communication station) on the terminal side and the base station system BSS on the network side NS include the provision of a physical connection which is called the Temporary Block Flow TBF in GPRS. A temporary Block Flow (TBF) is a physical connection used by the two RR peer entities to support the unidirectional transfer of LLC packet data units (PDUs) on packet data physical channels. The TBF is allocated radio resources on one or more packet data channels PDCHs and comprises a number of RLC/MAC blocks carrying one or more LLC PDUs. A TBF is temporary and is maintained only for the duration of the data transfer (i.e. until there are no more RLC/MAC blocks to be transmitted and in RLC acknowledgement mode, all of the transmitted RLC/MAC blocks have been successfully acknowledged by the receiving entity). The physical connection TBF is assigned a temporary flow identifier (TFI) by the network side NS to associate the mobile station MS with the current physical connection TBF.

For example, an uplink state flag (USF) is used by the network side NS (i.e. the network scheduler) to control the multiplexing of the different mobile stations on the uplink connection (for the packet transfer). The uplink state flag USF is included in the header of each RLC PDU packet on the downlink connection (Packet Data Channel PDCH). The uplink state flag USF indicates the owner of the corresponding uplink data packet (radio block). The mobile station MS which has the identity indicated in the USF field is allowed to transmit a RLC block (data packet) in the uplink direction on the corresponding time slot TS.

Thus, the physical connection is used to organize the access of the radio resources. A mobile station MS having a valid TBF is therefore included in the GPRS scheduling mechanism and can expect to get access to the radio resources according to its signalled multislot capabilities. Thus, the physical connection indicates in the subscriber terminal (mobile station) and in the network side (base station system BSS) that the subscriber terminal and the network side are valid for performing a packet data transfer. Via this physical connection the subscriber terminal side and the network side know that the subscriber terminal (mobile station or communication station) should be included in the GPRS timeslot (radio resources) scheduling. Thus, via the physical connection a context is generated in the subscriber terminal side and the network side which indicates the subscriber terminal and network side as being included in the packet data communication system radio resources scheduling process. This context or physical connection is only maintained during the data packet transfer and is terminated as soon as a packet data transfer stops.

## REAL TIME APPLICATION (VOICE CODER)

There are applications like real-time applications, which are sensitive against delays occurring during the end-to-end data packet transfer. In particular, this applies to voice coding (a real time application), without being limited to it.

With increasing processing power it became beneficial to compress voice/audio information before sending it to the subscriber terminal or the network side. This is especially true for transmission of speech/audio over wireless channels because transmission costs are much higher than computing costs in this environment. Nowadays, many different coders have been employed and are in use. Most of these coders generate a constant bit rate traffic (CBR) and produce data packets at typical and well defined regular intervals. The coder standard ITU-T G.723.1 may serve as a typical example of these coders. Data packets containing compressed speech information are produced with inter-arrival times TDIFF of 30 ms and the data packets are typically 24 bytes in size.

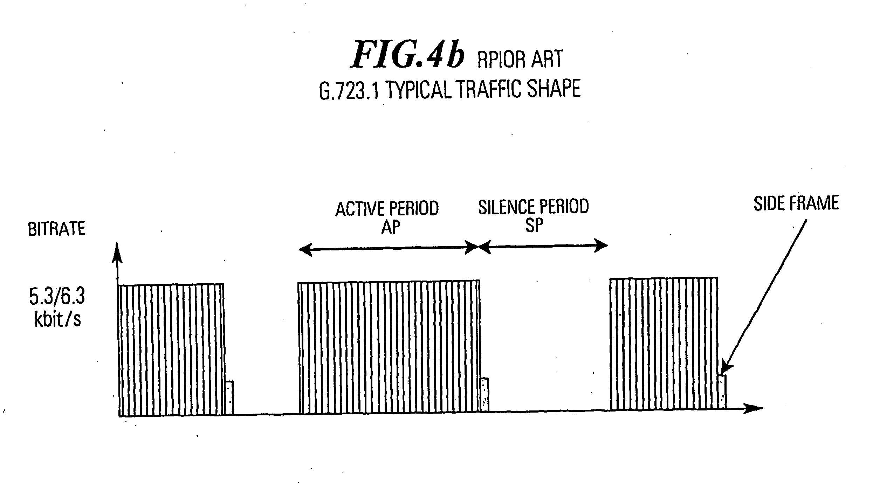

A coder on the transmitting subscriber terminal side SS or the network side NS may use a silence detector to avoid generating packets during speech pauses. When the silence detector detects a silence period it sends a silence insertion descriptor SID as shown in Fig. 4b in order to indicate the silence period. In the silence period no data packets are generated. The silence insertion descriptor SID is also used to define the comfort noise level generated at the receiver site during the silence period. Fig. 4b shows a typical packet stream produced by such a coder according to G.723.1.

Of course, it depends on the coding standard used whether or not a silence insertion descriptor SID is sent by the coder. That is, other coders may prefer not to insert a silence insertion descriptor in which case the silence periods are indicated to the receiver site differently, or not at all.

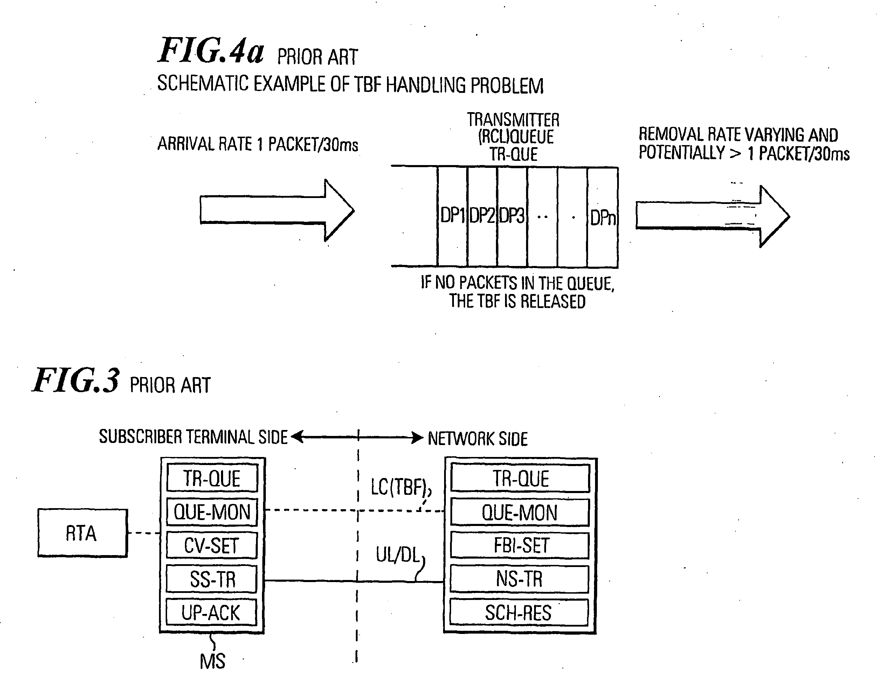

In principle, the typical traffic shape shown in Fig. 4b can be generated by a coder or any real time application RTA connected or incorporated into the mobile station as shown in Fig. 3.

### TRANSMISSION QUEUE TR-QUE

The data packets as generated in Fig. 4a by a real time coder for speech (or in fact by any other application connected to or incorporated into the mobile station MS) is transmitted by the subscriber terminal side or the network side from a transmission buffer containing a transmission queue TR-QUE illustrated in Fig. 3. As shown in Fig. 4a, the data packets DP1, DP2, DP3 ... DPn are successively transmitted to the network side or subscriber terminal side from this transmitter queue TR-QUE. However, when transmitting encoded speech data packets/audio data packets over GPRS/EGPRS there is a certain threat that the systems behaves poorly due to the frequent and unnecessary releases of the physical connection TBF, even during active periods of a speaker. The inventors have discovered such a problem during their studies of experimental and simulative systems.

A reason for the frequent release of the physical connection TBF is the behaviour of GPRS focussing on a transmission of large application packet data units PDUs such as complete web-pages or simply the content of a TCP window (TCP: Transfer Control Protocol). For such applications which quickly and continuously generate data packets, the transmitter queue TR-QUE is likely to be filled and the individual data packets are successively transmitted whilst the physical connection TBF is not interrupted. In contrast to that, in the case of audio/speech transmission over (E) GPRS the transmitter queue TR-QUE is still constantly filled with small data packets from the application (the speech coder). For the case of the G.723.1 standard speech coder, an application packet enters the (E)GPRS transmitter queue TR-QUE every 30 ms. That is, for such a coder the inter-arrival time is typically 30ms.

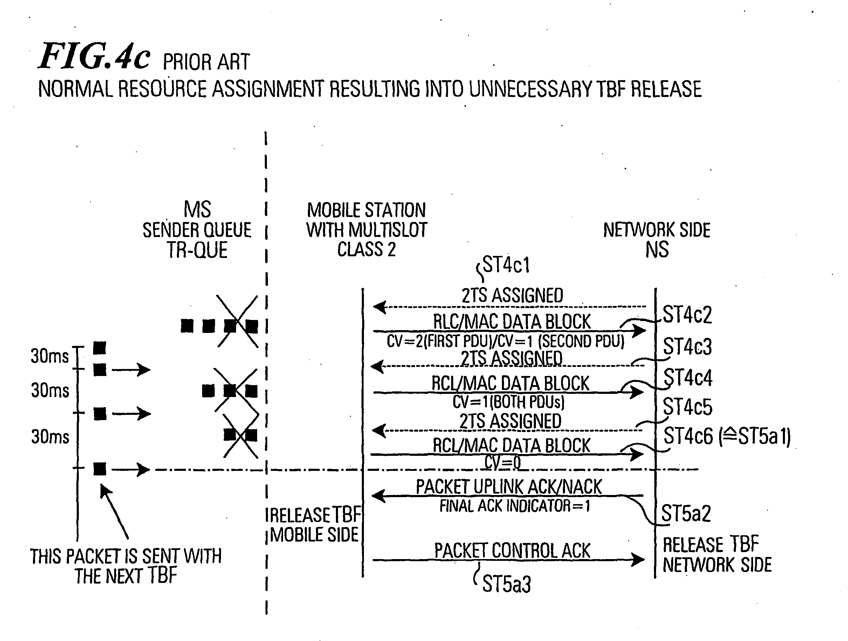

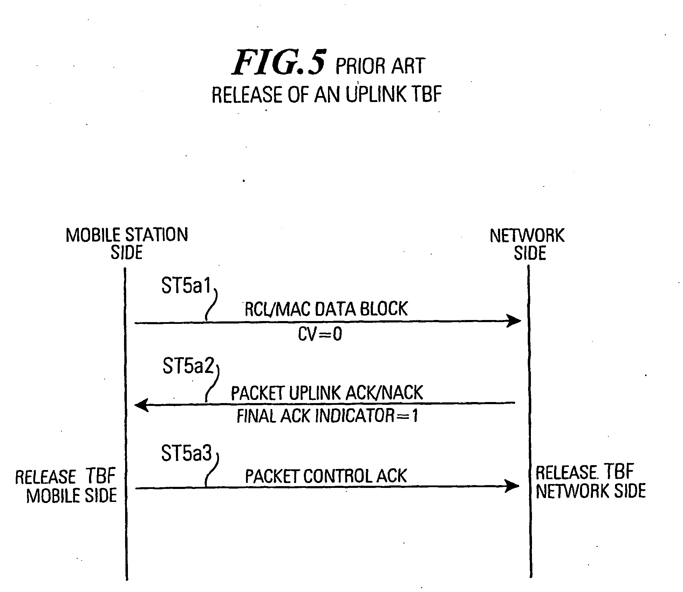

However, if the packet is transmitted from the queue in a shorter time than 30ms, the transmitter queue TR-QUE is emptied (as illustrated in Fig. 4a and Fig. 4c) and in such a case the GPRS physical connection release procedures as shown in Fig. 5 are immediately started. This leads especially for high-end terminals (high multislot capability) to the unwanted effect of frequent physical connection releases and establishments. In such a case the application and end-user would experience an unnecessary high end-to-end delay and furthermore, of course the repeated release and establishment of the physical connection TBF entails a heavy signalling load during the TBF handling.

Since unnecessary TBF releases have been recognized as the core problem of the current GPRS, hereinafter with reference to Fig. 5 and Fig. 4c the procedure for uplink TBF release will be explained with more detail. It should also be noted that of course these release and establishment procedures for a physical connection are by no means limited to the real time application data packet patterns since a TBF release will start whenever an empty queue in the transmitter is detected, independent from the fact whether the data packets are generated by a real time application or any other application.

### PHYSICAL CONNECTION RELEASE

As explained above, the establishment of physical connection TBF is done by using the signalling channels of GPRS. This means that a demand for a physical connection TBF needs to be signalled in the worst case on the random access channel. In general, the establishment of a physical connection TBF takes a certain time and occupies a signalling capacity in the communication system. The GPRS standard does not define exactly the conditions when a physical connection TBF has to be established and released. However, the method to perform the establishment and release procedures have been defined quite clearly.

Thus, with reference to Fig. 5 and Fig. 3 the release procedure for an uplink physical connection TBF is described. The subscriber terminal side comprises a subscriber terminal side transmitter queue monitoring device QUE-MON for determining wether the transmitter queue TR-QUE comprises data packets DP to be transmitted (see Fig. 4a). Furthermore, the subscriber terminal side comprises a transmitter queue information setting means CV-SET for determining on the basis of the determination made by the transmitter queue monitoring means QUE-MON a transmitter queue information CV indicating whether the transmitter queue is empty (CV=0) or whether the transmitter queue TR-QUE contains at least one remaining data packet to be transmitted to the network side (CV>0). The subscriber terminal side transmitter SS-TR transmits to the network side NS data packets DP from the transmitter queue TR-QUE and transmits in association with the respective data packet DP the determined transmitter queue information CV. The transmitter queue information CV can be transmitted in the respective packet DP as shown in Fig. 5 and Fig. 4c. However, it is of course sufficient to link the transmission of the data packet to the transmission of the respective transmitter queue information CV. Thus, every RLC/MAC data block sent from the subscriber terminal side to the network side contains the transmitter queue information CV (which hereinafter will also be referred to as the counter value CV field). Usually this counter value CV field is transmitted in the header and is used to signal the number of remaining RLC packets in the transmitter queue TR-QUE. Fig. 4c shows one example of the usage of the counter value CV field for a mobile station handling 2 time slots in a TDMA frame. As can be seen from Fig. 4c, for each transferred data packet a respective counter value field CV is determined, i.e. in Fig. 4c CV=2 for the first data packet (PDU) and CV=1 for the second packet (PDU)).

According to the ETSI GSM 04.60 V8.2.0 standard the transmitter terminal side transmitter queue information setting means CV-SET sets as said transmitter queue information CV a counter value CV determined in accordance with the following expression:

$$\texttt{Integer x = roundup ((TBC-BSN'-1)/NTS)}$$

CV = x, if x<= BS_CV_MAX
15, otherwise

where:

|        |                                                                                   |
|--------|-----------------------------------------------------------------------------------|
| CV:    | counter value inserted in each data packet DP before transmission;                |
| TBC:   | total number of data packets DP present in the transmitter queue TR-QUE;           |
| NTS:   | transmission resources RES defined as a number of time slots (multislot capability NTS) in a single frame used for data packets DP transferred on the uplink connection with range 1 to 8; |
| BSN':  | absolute block sequence number of the RLC data block with range from 0 to (TBC-1); |
| BS_CV_MAX: | a parameter broadcast in the system information; and                           |
| roundup: | rounds upwards to the nearest integer.                                           |

According to the standard, once a mobile station MS transmits a value of CV other than 15, the mobile station shall transmit exactly (TBC-BSN'-1) not transmitted RLC data blocks. In other words, a countdown procedure is started, which leads to the release of the physical connection TBF. In particular, in context with real-time applications, this can cause an unnecessary release of the physical connection TBF and therefore can introduce an unnecessary delay. Any data that arrives from the higher layer after the commencement of the countdown process shall be sent within a future physical countdown TBF.

Also without focusing on the countdown procedure, the normal resource assignment results in an unnecessary physical connection TBF release as shown in Fig. 4c. The transmitter queue information setting means CV-SET always determines at a certain time the number of data packets which remain when the present data packet is transmitted to the network side. Since for example in step ST4c1 the network side transmission resource scheduler SCH-RES had assigned two time slots 2TS (because the mobile station is a multislot capability 2 mobile station) the first data packet transferred in step ST4c2 receives a counter value CV = 2 (CV = roundup [(4-1)/2] = roundup [1.5] = 2). Likewise, the second data packet receives a counter value of CV = 1 (CV = roundup [(3-1)/2] = roundup [1.0] = 1. The assignment of two timeslots and the transmission of data slots with the respectively calculated counter value CV is continued in Fig. 4c in steps ST4c3, ST4c4, ST4c5 and ST4c6. In Fig. 4c a multislot capability 2 mobile station and an application generating a new data packet every 30ms was assumed. However, also for the general case the calculation of the counter value CV and the transmission of the data packets is the same. That is, in a multislot capability x transmission maximum x timeslots are used for transmission as assigned beforehand by the network side NS and each of the x data packets have a corresponding counter value CV.

Furthermore, it should be noted that of course the transmission of the data packets by using timeslots can also be different. For example, each data packet can be distributed over the plurality of timeslots and can be reassembled on the network side NS. Still, after reassembly in the network side NS the respective counter value CV will indicate whether there are any further packets in the transmitter queue TR-QUE or not.

In contrast to the usage of a counter value CV in connection with a release and re-establishment of a physical connection such as a TBF, WO 99/35876 describes a method for synchronisation adaption of asynchronous digital data streams for an ATM link present on a base transceiver station interface to a base transceiver station of a GSM system. At the input of a transmission buffer a sample rate converter is arranged in order to adapt the sample rate depending on a buffer status indicating whether the buffer is nearly full or nearly empty. In particular, in case the buffer starts to run out of data and the "empty" state of the buffer is detected (the amount of data stored in the buffer falls below a lower limit), the sample rate converter is rendered operative in order to increase the amount of data to be stored in the buffer until normal operation values are reached again, i.e. until the "OK" state is detected again when the amount of data stored in the buffer exceeds the lower limit again. Thus, when the buffer starts to run out of data at least some of the incoming data samples may be duplicated in order to increase the amount of data to be stored on the input side of the transmission buffer. The detection of the buffer state and the variation of the sample rate at the input of the transmission buffer is made independently of any release or re-establishment of a physical connection, as shown for the release case in Fig. 5 herein.

As shown in Fig. 5, for the release of an uplink physical connection TBF, at a certain stage in step ST5a1 a RLC/MAC data packet containing a counter value CV=0 will be transmitted to the network side. The counter value CV=0 in a packet clearly indicates an empty queue to the network side after transmission, i.e. CV=0 indicates that there are no further "remaining" data packets in the queue after the transmission of the data packet containing CV=0. In this case the network side will first transmit a so-called packet uplink acknowledgement/negative acknowledgement message in step ST5a2 incorporating a final acknowledgement indicator = 1 to the subscriber terminal side. The message in step ST5a2 is to indicate to the subscriber terminal side that the network side has understood that no further data packets are residing in the subscriber terminal side transmitter queue and that an uplink TBF release procedure is to be started. In step ST5a3 the mobile side sends a packet control acknowledgement message to the network side after releasing the physical connection TBF on the mobile side. Finally, after receiving the message in step ST5a3 the network side performs the release of the physical connection on the network side. As can clearly be seen, a certain time is needed to release or terminate the physical connection for the uplink and furthermore signalling resources are occupied in the network.

## SUMMARY OF THE INVENTION

As explained above, during a data packet transfer between the subscriber terminal side and the network side several conditions may occur which lead to the transmission of a transmitter queue information to the respective other side indicating an empty queue in the respective transmitter queue TR-QUE. This results in frequent releases of the physical connection with the subsequent need of additional signalling to rebuild the physical connection whenever new data packets are available in the transmitter queue.

There may be many reasons why the transmitter queue becomes empty, i.e. if the removal rate of the data packets from the transmitter queue varies and is potentially higher than the rate of the arriving packets (see Fig. 4a). As shown in Fig. 4c, another condition which may lead to a physical connection release is if too many packets are taken away from the transmitter queue if for example in a multislot capability 2 mobile station two time slots (transmission resources) are assigned and only two packets are available in the transmitter queue. During the next data packet transfer to the network side, using two time slots on the uplink, the transmitter queue TR-QUE thus becomes empty leading to a corresponding indication CV = 0 which starts the physical connection release procedure. Even when a next packet arrives (as the packet arriving at the dot-dashed line in Fig. 4c) there will first be a physical connection release and thereafter immediately a physical connection establishment due to the new data packet. Such frequent establishment and release of physical connection drastically increase the end-to-end delays.

The inventors have discovered that the increased end-to-end delay during a data packet transmission is due to the fact that conditions in the subscriber terminal side or the network side may lead to empty queues in the subscriber terminal side and thus to frequent physical connection releases consuming time and signalling capacity.

Therefore, the object of the present invention is to provide a network controller, a method, and a communication system in which empty subscriber terminal side queues leading to unnecessary physical connection releases during a data packet transfer from the subscriber terminal side to the network side are avoided and the delay time is reduced.

This object is solved by a network controller according to claim 1. The object is also solved by a communication system according to claim 12. Furthermore, the object is solved by a method in accordance with claim 26.

In accordance with the invention, a physical connection is used between a subscriber terminal side and a base station system of a packet data communication system in order to transmit user data packets from a transmission buffer of the subscriber terminal side. The physical connection is provided by scheduling the user data packets present in the transmission buffer as a number of radio blocks on radio resources of a radio communication link between the subscriber terminal side an the base station system. When a transmitter queue length information, for example a counter value, indicates that no user data packets are present in the transmission buffer, a physical connection controller closes the physical connection. During an active data packet arrival period, in which the data packets have for example inter-arrival times which are lower than a predetermined threshold, a control is performed such that at least one user data packet remains in the transmission buffer on the subscriber terminal side such that the physical connection controller does not close the physical connection. On the network side the transmission resources controller determines the radio resources to be used by the subscriber terminal side for transmission in such a manner that the scheduling of the user data packets as a number of radio blocks on the determined radio resources causes at least one user data packet to remain in the transmission buffer.

Thus, frequent releases of the physical connection during the active data packet arrival period are avoided.

One aspect of the invention is a network controller (claim 1) of a communication system for performing packet data transfer on a connection between a subscriber terminal side and a network side, wherein during a data packet transfer a physical connection is maintained which indicates in the subscriber terminal and the network side that the subscriber terminal and the network side are valid for performing said packet data transfer, including: a network side receiver for receiving a transmitter queue length information transmitted from a subscriber terminal, said length information indicating the length of a transmitter queue in a transmission buffer in said subscriber terminal; a network side transmission resources controller for assigning to a subscriber terminal transmission resources for the data packet transfer on the uplink connection on the basis of said received length information such that during an active data packet arrival period in which data packets arrive in said transmitter buffer at least one data packet remains in the subscriber terminal side transmitter buffer queue.

Another aspect of the invention is a communication system (claim 12) for performing packet data transfer on a connection between a subscriber terminal side and a network side, wherein during a data packet transfer a physical connection is maintained which indicates in the subscriber terminal and the network side that the subscriber terminal and the network side are valid for performing said packet data transfer, comprising: on said subscriber terminal side: a subscriber terminal side transmitter buffer (TBUF) for buffering data packets to be transmitted to the network side as transmitter queue; a subscriber terminal side transmitter queue length information setting means for determining a transmitter queue length information in accordance with the length of said transmitter queue; and a subscriber terminal side transmitter transmitting in association with each data packet from said transmitter queue said length information to the network side; and on said network side: a network side receiver for receiving said transmitter queue length information transmitted from a subscriber terminal; and a network side transmission resources controller for assigning to a subscriber terminal (SS) transmission resources for the data packet transfer on the uplink connection on the basis of said received length information such that during an active data packet arrival period in which data packets arrive in said transmitter buffer at least one data packet remains in the subscriber terminal side transmitter buffer queue.

Yet another aspect of the invention is a method (claim 26) in a communication system for performing packet data transfer on a connection between a subscriber terminal side and a network side wherein during a data packet transfer a physical connection is maintained which indicates in the subscriber terminal and the network side that the subscriber terminal and the network side are valid for performing said packet data transfer comprising the following steps: determining on a subscriber terminal side a transmitter queue length information in accordance with the length of said transmitter queue in said subscriber terminal;

transmitting in association with each data packet from said transmitter queue said length information to the network side; receiving said transmitter queue length information transmitted from said subscriber terminal; and assigning to said subscriber terminal transmission resources for the data packet transfer on the uplink connection on the basis of said received length information such that during an active data packet arrival period in which data packets arrive in said transmitter buffer at least one data packet remains in the subscriber terminal side transmitter buffer queue.

According to an aspect of the invention the length information transmitted from the subscriber terminal is used on the network side in order to determine the transmission resources for the next uplink frame such that after transmitting the next uplink frame at least one data packet is left in the subscriber terminal transmitter queue during an active period in which data packets arrive in the transmitter queue. Therefore, it is ensured that the last data packet in the uplink frame contains a length information which indicates a non-empty queue (since still at least one data packet is left in the transmitter queue during the active period). Therefore, the physical connection release procedure is not initiated in an active period.

Preferably, a subscriber terminal side transmitter queue length information setting means is adapted to set as said length information a counter value determined in accordance with the following expression:

$$CV = \text{round up } [(TBC-1)/NTS]$$

where:

CV:    counter value transmitted to the network side;

TBC:    total number of data packets present in the transmitter buffer; and

NTS:    transmission resources defined as the number of time slots (multislot capability NTS) in a single frame used for the data packet transfer on the uplink connection.

Preferably, the network side transmission resources controller decreases the transmission resources between a current transmission frame and the next transmission frame on the uplink connection if the length information indicates that the transmitter queue contains only one data packet. If a multislot capability 1 subscriber terminal is employed, then the length information indeed indicates the exact number of left data packets. However, if a subscriber terminal of a higher multislot capability (e.g. 2, 3, 4 etc.) is used, then the counter value (length information) having a value of 1 can indicate 1, 2 or more data packets in the transmitter queue.

Preferably, a physical connection terminating device is adapted to terminate said physical connection when a CV evaluation means determines that at least one of said counter values has a value of CV=0.

Preferably, the resource controller is not only capable to decrease the transmission resources in order to have only one data packet present in the transmitter queue, but it can also increase the transmission resources (timeslot) if an increasing number of data packets is detected in the transmitter queue. It is not always the case that the removal rate from the transmitter queue equals the arrival rate of data packets in the transmitter queue, e.g. it may happen that suddenly at a certain time point the transmitter queue is flooded with data packets which can be removed only slowly by using a small number of transmission resources. Therefore, in such a case the transmission resource controller increases the transmission resources such that a maximum number of data packets are transmitted in one uplink frame whilst of course the increase in the transmission resources is such that still one data packet remains in the transmitter queue even if more resources are allocated. Therefore, further preferably, said network side transmission resources controller assigns the maximum admissible number of time slots when said CV evaluation means determines that all presently received counter values have a value of CV>1.

Further preferably, when said CV evaluation means determines that at least one counter value has a value of CV=1 and at least one counter value has a value of CV>1, said network side transmission resources controller assigns a new number of time slots NNTS in accordance with the following relationship:

$$NNTS = NTS - NO(CV=1)$$

where NNTS is the new number of time slots for the next uplink frame, NTS is the multislot capability of the subscriber terminal and NO(CV=1) designates the number of counter values having a value of CV=1.

Further preferably, when said CV evaluation means determines that all presently received counter values have a value of CV=1, said network side transmission resources controller assigns a minimum number of time slots.

Preferably, said minimum number of time slots is one time slot when the arrival rate of data packets into the transmitter buffer queue is higher or equal than the removal frequency of data packets from said transmitter buffer queue.

Preferably, an arrival rate estimator is adapted to estimate the arrival rate of data packets into the transmitter queue on the subscriber terminal side on the basis of the received counter values received within a measurement time interval.

Preferably, the transmission resources are further assigned on the basis of the estimated arrival rate.

Preferably, said minimum number of time slots is adjusted on the basis of the estimated arrival rate.

Further advantageous embodiments and improvements of the invention can be taken from the other dependent claims. Furthermore, it should be noted that the invention is not restricted to the examples and embodiments described in the description and claimed in the claims. In particular, the present invention comprises embodiments which result from a combination of features and/or steps which have been separately described and/or claimed.

**BRIEF DESCRIPTION OF THE DRAWINGS**

Fig. 1    shows a principal overview of a GPRS network architecture;

Fig. 2    shows a typical GPRS protocol structure;

Fig. 3    shows a subscriber terminal side and a network side in accordance with the prior art;

Fig. 4a    shows a schematic example of a physical connection handling problem, when the transmitter queue becomes empty;

Fig. 4b    shows the typical packet data traffic shape according to the G.723.1 speech coder;

Fig. 4c    shows the emptying of a transmitter queue with a static assignment of resources from the network side;

Fig. 5    shows the release of an uplink physical connection according to the prior art;

Fig. 6    shows a principal block diagram of a subscriber terminal side and a network side according to the principle of the invention;

Fig. 7    shows a flowchart for determining transmission resources according to the principle of the invention;

Fig. 8    shows the adjustment of the transmission resources (timeslots) in accordance with the embodiments of the invention;

Fig. 9    shows an example of decreasing the number of timeslots for illustrating the procedure in Fig. 8 for a multislot capability 2 mobile station when the transmission rate and the arrival rate are equal (1/20ms);

Fig. 10    shows a continuation of Fig. 9 for the case when the application stops producing data packets and a TBF release is started due to CV=0;

Fig. 11    shows the steps in Fig. 9 and Fig. 10 in combination for a fixed data packet arrival rate of 1/30ms;

Fig. 12    shows a similar example as in Fig. 11 but for the adjustment of the number of timeslots for a multislot capability 4 mobile station where again it is assumed that there is a constant rate arrival of data packets into the transmitter queue;

Fig. 13    shows an example similar to Fig. 11 for a multislot capability 1 mobile station where again it is assumed that a constant arrival rate (30ms) of data packets into the transmitter queue is present and where the removal rate (transmission rate) is assumed to be higher than the arrival rate; and

Fig. 14a    shows an example of decreasing the number of resources for a multislot capability 3 subscriber terminal without using the steps ST82'' and ST83'' in Fig. 8;

Fig. 14b    shows an example of decreasing the number of resources for a multislot capability 3 subscriber terminal with using the steps ST82'' and ST83'' in Fig. 8; and

Fig. 15    shows another embodiment of the invention for estimating the arrival rate of data packets in the transmitter queue on the network side.

In the drawings the same or similar reference numerals denote the same or similar steps and parts throughout.

## PRINCIPLE OF THE INVENTION

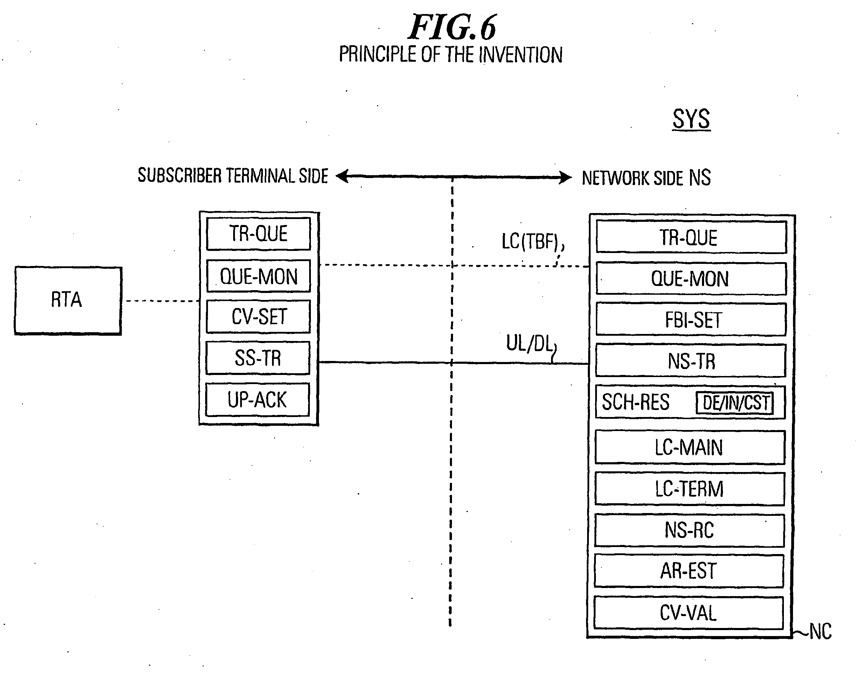

Fig. 6 shows a principle block diagram of the functionalities incorporated in particular on the network side as well as on the subscriber terminal side according to the embodiments of the invention. In addition to the devices already explained with reference to Fig. 3, the network side NS comprises a network controller NC according to the invention.

A network side receiver NS-RC is provided for receiving the data packets and the transmitter queue length informations CV transmitted from a subscriber terminal SS in association with the data packets. The length information CV indicates the length of a transmitter queue in a transmission buffer TR-BUF in the subscriber terminal SS and the value of the respectively received length information CV is evaluated in an CV evaluation means CV-VAL of the network controller NC.

Furthermore, the network controller NC comprises, as already explained with reference to Fig. 3, a network side transmission resources controller SCH-RES. For example, in a GPRS system as explained with reference to Fig. 1 and the protocol structure in Fig. 2, the MAC layer provides the multiplexing of several mobile stations on the timeslot structure of GSM and arbitrates between multiple mobile stations attempting to allocate resources and transmitting simultaneously. The operations of the MAC functions allow a single mobile station to use more then one timeslot (TS) simultaneously. The GPRS MAC layer is responsible for providing efficient multiplexing of data and control signalling on the uplink and downlink connections UL, DL.

On the uplink the multiplexing is controlled by transmission resources allocation to individual users. This is done by resource requests which are sent by the mobile station to the network wherein the network resource controller then has to schedule the timeslots on the uplink. As also explained above, if several mobile stations simultaneously use the uplink towards the network side, the uplink state flag USF is used by the network to control the multiplexing of different mobile stations on the uplink connection UL. The uplink state flag indicates thus the owner of the corresponding uplink radio block whilst the MAC layer acting as the resource controller controls the multiplexing on the uplink connection by medium allocation to the individual users. As explained with reference to Fig. 4c above, such an assignment of timeslots (transmission resources) for the next transmission on the uplink frame is made in steps ST4c1, ST4c3, ST4c5.

However, whilst in the example of the related art according to Fig. 4c the resource allocation is made in accordance with the multislot capability of the respective subscriber terminal (e.g. if the subscriber terminal can transmit on two timeslots at the same time, two timeslots will be reserved if the traffic load in the network allows to do so), according to the invention the network side transmission resources controller NC assigns to a subscriber terminal transmission resources for the next TDMA frame on the uplink connection frame UL on the basis of said received length information CV. More particularly, the resources controller SCH-RES controls the available transmission resources in such a manner that during an active data packet arrival period in which data packets arrive in said transmitter buffer at least one data packet DP remains in the subscriber terminal side transmitter buffer queue TR-QUE of the transmission buffer TR-BUF. That is, in an active period in which actually data packets generated by an application arrive in the transmitter buffer the network controller adjusts the resources such that at least one data packet is available in the transmitter buffer queue to be transmitted to the network side in the next uplink frame.

The active period is a period in which actually no physical connection release is desired from the network side or the subscriber terminal side, i.e. in this period the application continuously generates data packets which arrive at the transmitter buffer and which should be transmitted to the network side without an unnecessary and undesired physical connection release. An active period can for example be determined by evaluating the inter-arrival time of data packets arriving on the subscriber terminal side and determining an active period as period in which all inter-arrival times are lower than a predetermined threshold. Such an example is e.g. described in the European patent application Nr. 00 106 925.1. Alternatively, it is possible to determine an active period simply by periodically, e.g. every 30ms, checking the transmitter queue in order to determine whether a new packet has arrived or not. If always a new packet is detected than the active period is determined to be continued and otherwise the active period is determined to be terminated in which an emptying of the transmitter queue will be allowed resulting in a TBF release subsequently.

Since for every data packet on the uplink frame a corresponding length information of the transmitter queue TR-QUE is transmitted (preferably for example in the header of the data packet), the network controller NC can always make an assessment of the still remaining data packets in the transmitter queue. As a worst case the network controller NC must assume that no further data packet enters the transmitter queue TR-QUE and therefore the resources controller can adapt the transmission resources for the next uplink frame depending on the last received length information(s).

As explained above, according to the prior art a length information (e.g. the counter value CV) can be a rounded value with respect to the number of remaining data packets in the transmitter queue. This type of conventional counter value is usable with the invention. However, hereinafter, it will be explained how the subscriber terminal side transmitter queue length information setting means CV-SET sets, in accordance with a preferred embodiment of the invention, as said length information CV.a modified counter value CV determined in accordance with the following expression:

$$\text{CV} = \text{round up } [(\text{TBC-1})/\text{NTS}]$$

where:

CV: counter value transmitted to the network side;
TBC: total number of data packets (DP) present in the transmitter buffer (TR-BUF); and
NTS: transmission resources (TS) defined as the number of time slots (multislot capability NTS) in a single frame used for the data packet (DP) transfer on the uplink connection (UL).

As will be appreciated, for a multislot capability 1 subscriber terminal (generally a communication station) the counter value CV will indeed exactly indicate the number of remaining packets. For any subscriber terminal of a higher multislot capability, the counter value will be rounded up and therefore can indicate that 1, 2, 3 or a higher number of data packets are still remaining in the transmitter queue. As will be explained below, even for higher multislot capabilities the network transmission resources controller SCH-RES can however make a worst case analysis on the basis of this length information CV such that the transmitter queue never becomes empty during an active data packet arrival period in which data packets arrive in said transmitter buffer queue.

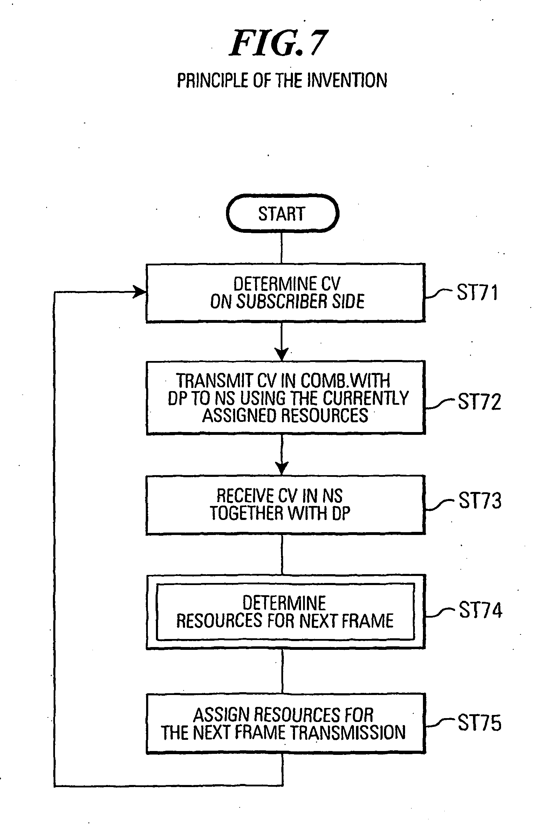

Fig. 7 shows a flowchart in accordance with the method of the invention. In step ST71 the subscriber terminal side transmitter queue length information setting means CV-SET determines the length information CV in accordance with the length of the transmitter queue TR-QUE. Preferably, the length information setting means CV-SET determines the number of data packets DP of the transmitter queue TR-QUE and sets said transmitter queue length information CV in accordance with the determined number of data packets DP. The fact that the length information is set in accordance with the determined number of data packets means, in accordance with the above-mentioned formulas, that only for the multislot capability 1 subscriber terminal the exact number of data packets is indicated in the counter value CV. For multislot capabilities of a higher order there is only a setting in accordance with the number of data packets due to the roundup process.

In step ST72 the subscriber terminal transmitter SS-TR transmits the length information in combination with the data packet to the network side controller NC using the currently assigned resources. The length information CV can be transmitted (e.g. on a separate channel) synchronized to the transmitted data packet and preferably the length information CV can be incorporated in a part of the data packet, for example in the header of the data packet.

In step ST73 the network side receiver NS-RC receives the length information CV and in step ST74 the network transmission resources controller SCH-RES determines the transmission resources for the next uplink frame. As indicated in step ST74 in Fig. 7, the network resources controller SCH-RES can actually decide to decrease or increase or keep constant i.e. to adapt the transmission resources for the next frame. The determination in step ST74 is made in accordance with the length information such that at least one data packet remains in the subscriber terminal transmitter queue TR-QUE during an active data packet arrival period in which data packets arrive in said transmitter buffer queue.

In step ST75 the network controller NC assigns the resources determined in step ST74 to the next uplink frame and informs the subscriber terminal of the newly assigned transmission resources by a corresponding flag in a downlink packet or by a signalling information. This is shown, e.g. in step ST4c1, ST4c3, ST4c5 of Fig. 4c.

It should be noted, that preferably the network side transmission resource controller SCH-RES adapts (see step ST84 to be discussed below) e.g. by decreasing the transmission resources between a current transmission frame and the next transmission frame on the uplink connection if at least one length information of at least one uplink data packet indicates that the transmitter queue contains only one data packet (see step ST82'' to be discussed below). The decreasing of transmission resources (timeslots) available for data packets on the next uplink TDMA frame actually makes sure that the transmitter queue never becomes empty during an active data packet arrival period in which data packets arrive in said transmitter buffer queue, by contrast to a case where keeping the number of timeslots constant for the next uplink frame would completely empty the queue.

Alternatively, if a large number of data packets is available in the transmitter queue, for example if the removal rate from the transmitter queue is lower than the arrival rate of data packets, then it also makes sense to increase (see step ST83' to be discussed below) the number of available timeslots for the next uplink frame connection, e.g. to set the maximum number of time slots depending on the multislot capability. However, it may not be possible to increase the number of timeslots to the maximum multislot capability because too many transmission resources (timeslots) may again empty the transmitter queue completely. Therefore, preferably the network controller NC increases the resources only to such an extent that at least one data packet again remains in the transmitter queue after the next uplink frame transmission during active periods of data packet arrival in the transmitter queue.

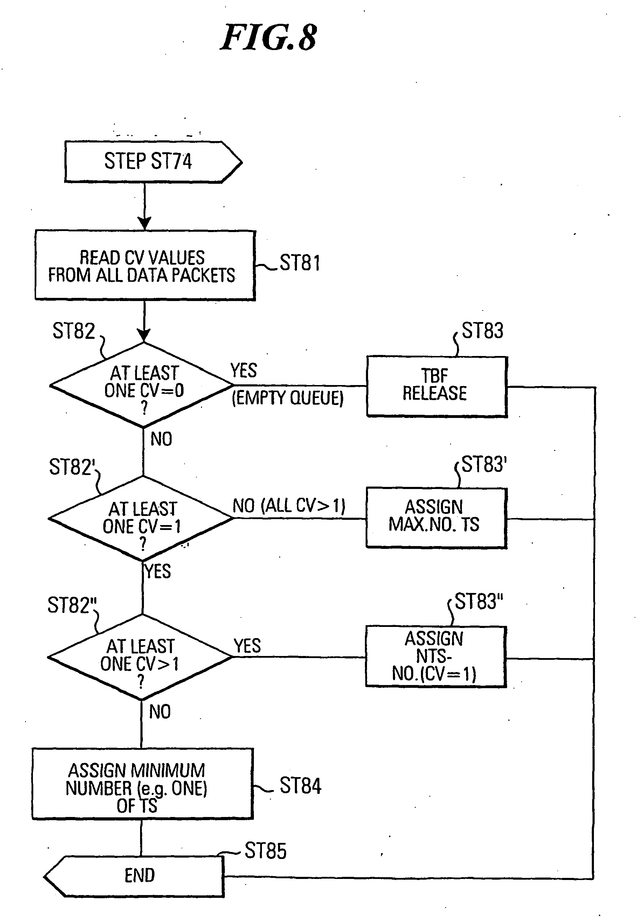

Fig. 8 shows the contents of the resource determination step ST74. In step ST81 the network side transmission resources controller SCH-RES reads all CV values associated with all data packets currently transmitted in the present uplink frame. For example, if the CV values are incorporated in the header of the data packets, the CV values are read from the headers of the data packets. Depending on the multislot capability, one, two or more CV values can be read.

In steps ST82 ... ST85 the transmission resource controller SCH-RES carries out a determination as to how many timeslots should be used in the next uplink TDMA frame on the basis of the CV value or CV values read in step ST81, i.e. on the basis of the read CV value(s) the network side transmission resources controller SCH-RES decreases or increases or keeps constant the time slots for the next uplink TDMA frame.

In step ST82 it is checked whether at least one CV value is CV = 0. If at least one CV value is CV = 0 then this indicates an empty queue and in step ST83 a physical connection (TBF) release procedure is carried out in step ST83, for example in accordance with Fig. 5. If there is no CV value satisfying CV = 0 ("N" in step ST82) then step ST82' is carried out.

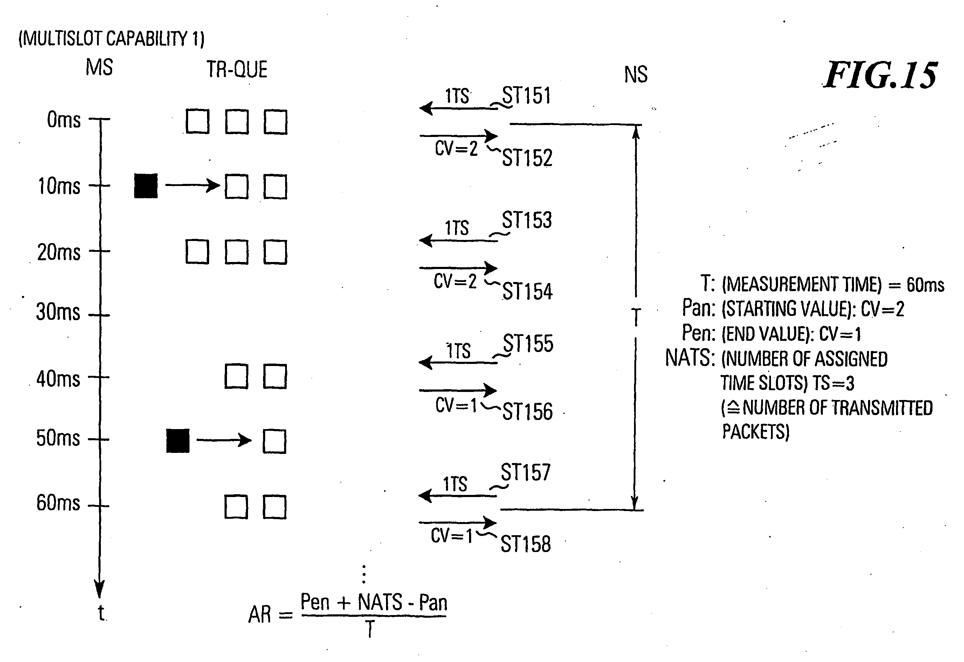

In step ST82' it is checked whether at least one CV value is CV = 1. If so ("Y" in step ST82') then this indicates that there is danger that only one data packet is left in the transmitter queue. Of course, only for the multislot capability 1 (one timeslot per TDMA frame) this will indicate the actual number of data packets left, that is only one data packet; for a higher multislot capability this may indicate one or more data packets left. Preferably, in step ST82'' it may also be checked whether at least one CV value is CV > 1. If there are no CV values satisfying CV > 1 ("N" in step ST82'') then all CV values will satisfy CV = 1. As a safeguard measure in step ST84 therefore the transmission resource controller SCH-RES assigns only a minimum number of time slots in step ST84. The minimum number of time slots may be only one time slot or even zero time slots depending on the arrival time. As will be explained below with respect to an estimation process (Fig. 15) there may be a case where actually the removal rate is higher than the arrival rate of data packets such that after removing one data packet from the transmitter queue no further data packet may arrive in the queue. In this case the transmission resources must be reduced to zero in the next uplink frame since otherwise an emptying of the last remaining data packet in the queue may occur thus causing a TBF release.

In step ST83'' the transmission resources controller SCH-RES determines the new number NNTS of time slots for the next uplink frame in accordance with the following relationship:

$$NNTS = NTS - NO(CV=1)$$

where NNTS is the new number of time slots for the next uplink frame, NTS is the multislot capability and NO(CV=1) indicates how often a counter value of CV=1 was received in association with data packets transferred from the terminal side in the last uplink frame. It should be noted that steps ST82'', ST83'' are provided in order to avoid that too many data packets reside in the transmitter buffer. However, it should be understood that these two steps are optional and that Fig. 8 is to illustrate the reducing and increasing of transmission resources dependent on the counter value CV and that steps ST82'', ST83'' are only preferred examples in order to more rapidly reduce the number of packets in the transmitter queue.

On the other hand, if in step ST82' it is determined that all counter values CV satisfy CV > 1, this means that there are a sufficient number of data packets in the transmitter queue to allow to set in step ST83' the maximum number of time slots possible depending on the multislot capability.

Thus, step ST82' and step ST84 make sure that during the controlling and determination of transmission resources at least one data packet remains in the transmitter queue during an active data packet arrival period in which data packets arrive in said transmitter buffer queue. Thus, the end-to-end delay can be minimized and at the same time the removal rate of data packets can be maximized, since there is a variable adjustment of the transmission resource allocation dependent on the current length of the transmitter queue.

The above described procedure and the examples below should only be taken as an illustration how an adjustment of the transmission resources can be made if it is assumed that each data packet occupies a single timeslot on the uplink frame. However, a skilled person can determine other reductions and increases of the transmission resources if the data packets are differently distributed over several timeslots on the uplink frame, e.g. because of a segmentation, i.e. if a single application data packet is distributed over more than one RLC data packet.

## EXAMPLE 1: MULTISLOT CAPABILITY 2 DECREASE

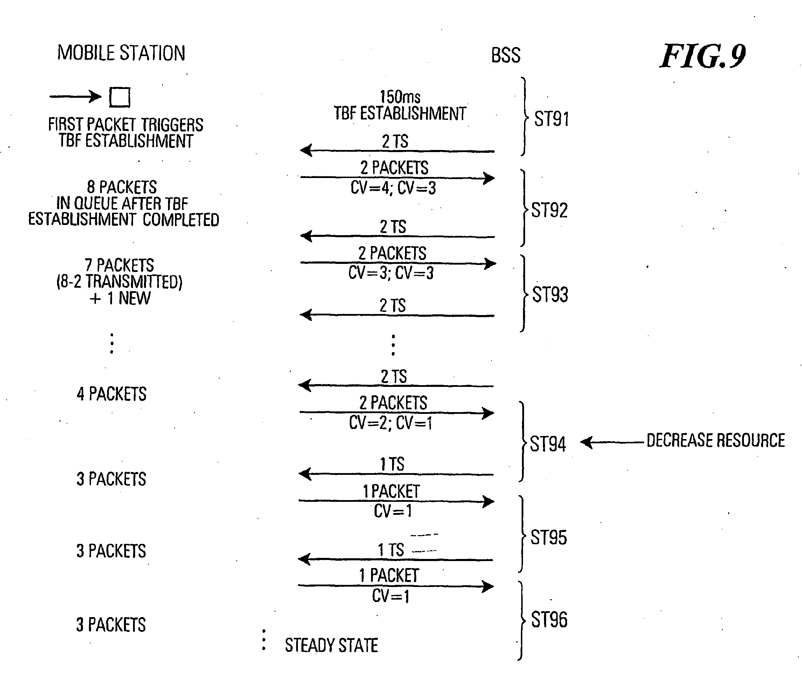

Fig. 9 shows an example how the adaptation of transmission resources makes sure that during an active data packet arrival period in which data packets arrive in said transmitter buffer queue at least one data packet remains in the transmitter queue TR-QUE using the procedure of Fig. 8. In the example in Fig. 9 it is arranged that three data packets remain in the queue.

In Fig. 9 it is assumed that the mobile station has a multislot capability of two timeslots. Furthermore, it will be appreciated that the number of remaining data packets in the transmitter queue will depend on the fact whether or not the removal rate of data packets equals the arrival rate of data packets, e.g. from a real time application. In Fig. 9 it is assumed that the real time application generates a single packet at a generation (arrival) rate of 1/20 ms. In the shown scenario, each 20 ms data packets can be transmitted from the queue via assigned resources. Furthermore, in Fig. 9 it is assumed that the application PDU results in exactly one RLC PDU, i.e. no application data packet segmentation occurs. Furthermore, in Fig. 9 it is assumed that the establishment for a physical connection TBF requires 150 ms, i.e. a time interval in which potentially 7 additional data packets may arrive in the transmitter queue (i.e. one packet which triggers the TBF setup and 7 further packets which arrive subsequently at a 1/20ms arrival rate).

In step ST91 a first data packet in the transmitter queue triggers the TBF establishment. Since the TBF establishment takes about 150 ms, the before mentioned 8 additional data packets have arrived in the transmitter queue. Since no data packet has yet been transferred with a counter value CV (and thus no resource re-adjustment was possible), the network side (the base station system BSS) assigns the two (maximum number of) timeslots 2TS in step ST91.

In step ST92 two of the 8 data packets will be transferred on the two timeslots with a counter value of CV = 4 and CV = 3, respectively. Since in step ST92 no counter values CV fulfil CV = 0 and since all counter values CV are larger than 1, i.e. CV > 1, the network side assigns in step ST92 still the maximum number of 2 timeslots TS in accordance with step ST83'.

Since it is assumed in Fig. 9 that the removal rate (not the transmission rate which is different to the removal rate (removal frequency) for terminals with a multislot capability greater than 1; in Fig. 9, for example: 2TS assigned -> 2 packets/20ms -> 1 packet/10ms whilst the removal rate determining whether the queue will be emptied or not is 1/20ms) of data packets from the transmitter buffer is twice the arrival rate of data packets, in step ST93 there will be again available seven data packets = (8 - 2 transmitted data packets) + one new data packet. Therefore, in step ST93 again two data packets can be transferred with counter values CV = 3 and therefore again the base station system BSS will assign the maximum possible number of two timeslots 2TS in step ST93. The procedure carries on until in step ST94 there will be only four data packets left in the transmitter queue. Therefore, in step ST94 a question in step ST82' will be answered with "Y" since one counter value CV satisfies CV = 1. Above, it has already been explained that steps ST82'' and step ST83'' are optional, however, the setting of the timeslot in accordance with step ST84 or with step ST83'' for the scenario on step ST94 leads to the same result, i.e. in step ST94 the transmission resources are decreased and only one timeslot 1TS is assigned.

In step ST94 two data packets have been transferred and (at equal removal frequency) in step ST95 there will be again three data packets in the transmitter queue. Since only one timeslot 1TS is available in step ST95 one data packet is transmitted again indicating a counter value of CV = 1. Therefore, in accordance with step ST84 only one timeslot 1TS is assigned in step ST95.

Since one data packet has been transferred in step ST95 (reducing the number of remaining data packets in the transmitter queue to two data packets) and a further data packet has arrived in the meantime, in step ST96 there are actually again available three data packets in the transmitter queue. Therefore, again step ST84 will be executed and the transmission resource allocation goes in a steady state after step ST96 with continuously providing three data packets in the transmitter queue.

The procedure in Fig. 9 can be summarized as follows. In the beginning, as many timeslots TS as possible are assigned. If all data packets with CV > 1 are received, then as many timeslots TS as possible are assigned in the next TDMA frame. If at least one data packet with CV = 1 is received, then only one time slot 1TS is assigned in the next TDMA frame, in accordance with rules as listed in Fig. 8.

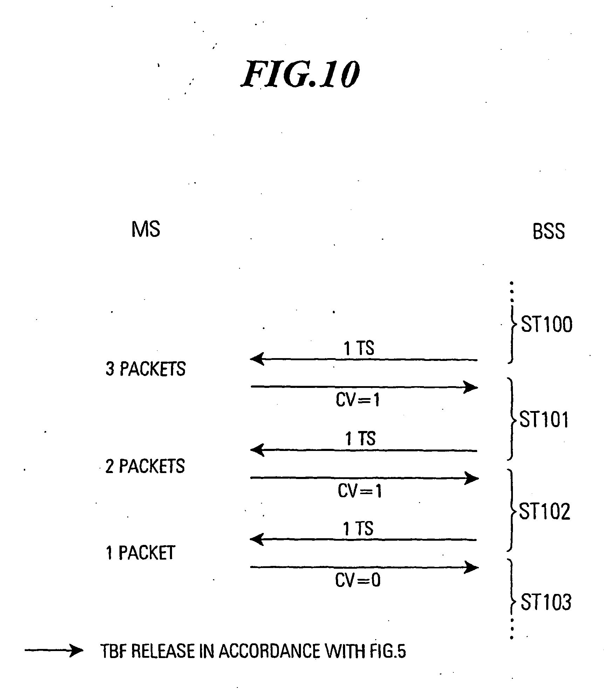

Fig. 10 shows a continuation of Fig. 9 for the case that the application stops producing data packets, i.e. that no further data packets arrive in the transmitter queue. In step ST100 (as continuation of e.g. step ST96) only one timeslot 1TS was assigned. Therefore, in step ST101 one data packet is transferred with CV = 1 and therefore step ST84 again sets only one timeslot 1TS in step ST101.

In step ST102 only two data packets are still available in the transmitter queue and one data packet will be transferred with CV = 1. Again, step ST84 will assign only a single timeslot 1TS in step ST102.

In step ST103 only one data packet will be left and this single data packet is of course transferred with CV = 0 in step ST103. As indicated with step ST83 in Fig. 8, whenever a counter value CV with CV = 0 is received, a logical connection TBF release procedure is started in accordance with Fig. 5.

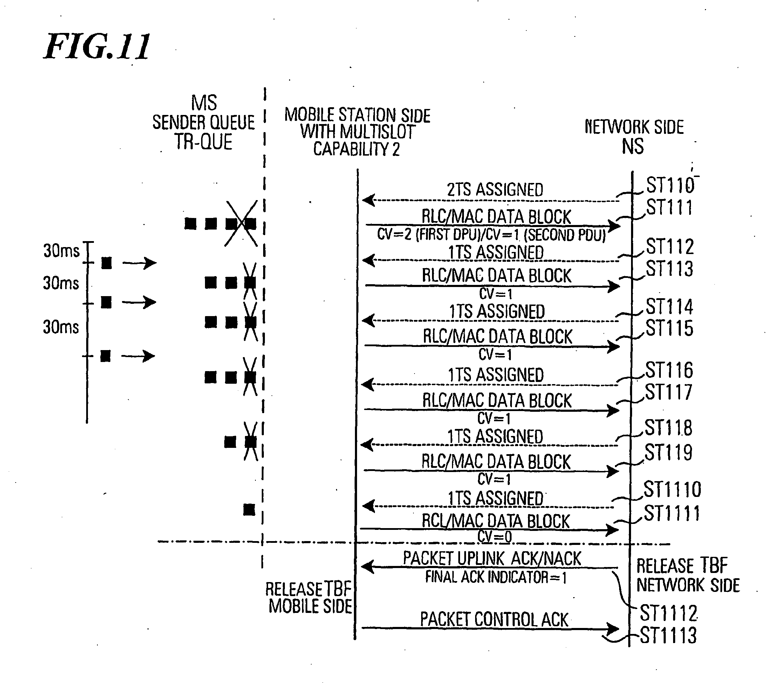

The procedure of transmitting data packets for a timeslot capability 2 mobile station is illustrated with steps ST94, ST95, ST96 in Fig. 9 and steps ST100, ST101, ST102, ST103 in Fig. 10 is summarized with steps ST110-ST1113 in Fig. 11. The difference is that in Fig. 11 every 30 ms a data packet is assumed to enter the transmitter queue TR-QUE.

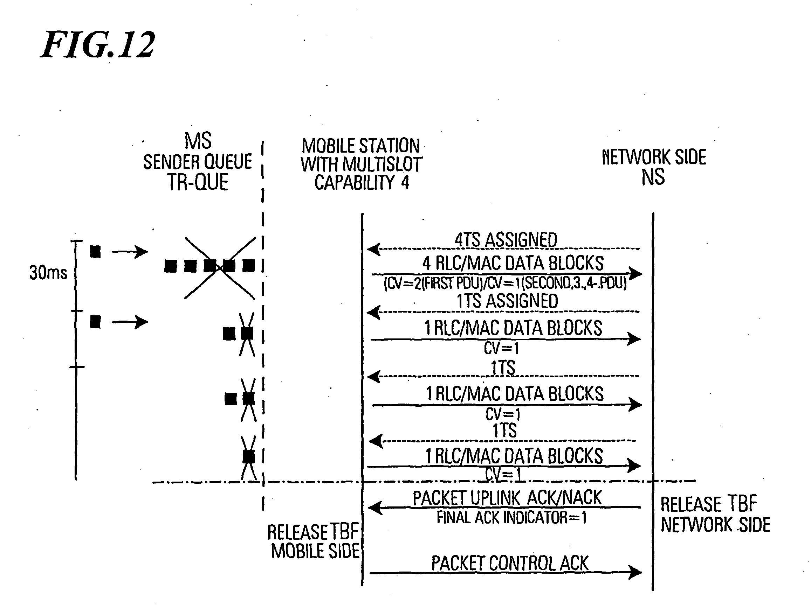

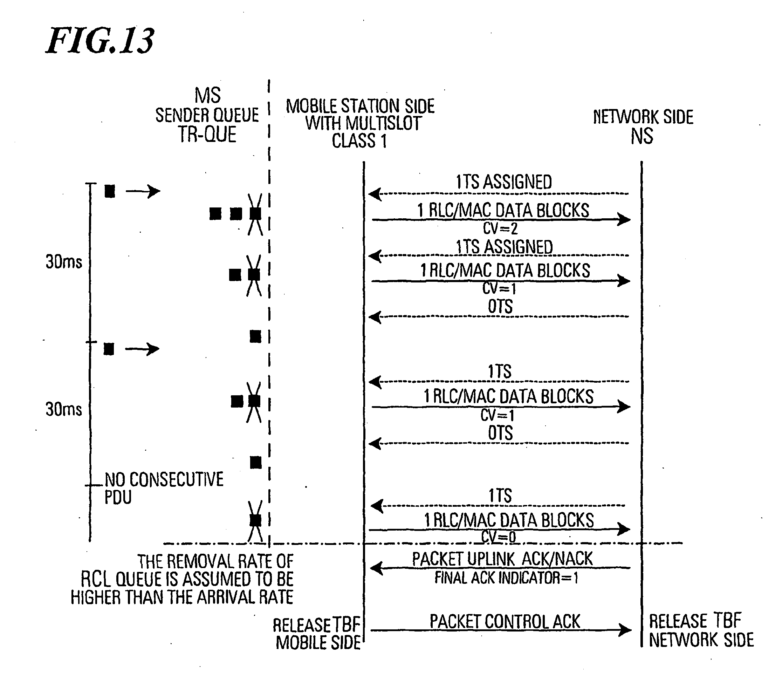

Fig. 12 and Fig. 13 show two corresponding examples to Fig. 11 for a multislot capability 4 mobile station and a multislot capability 1 mobile station, respectively.

## EXAMPLE 2: MULTISLOT CLASS 3 DECREASE

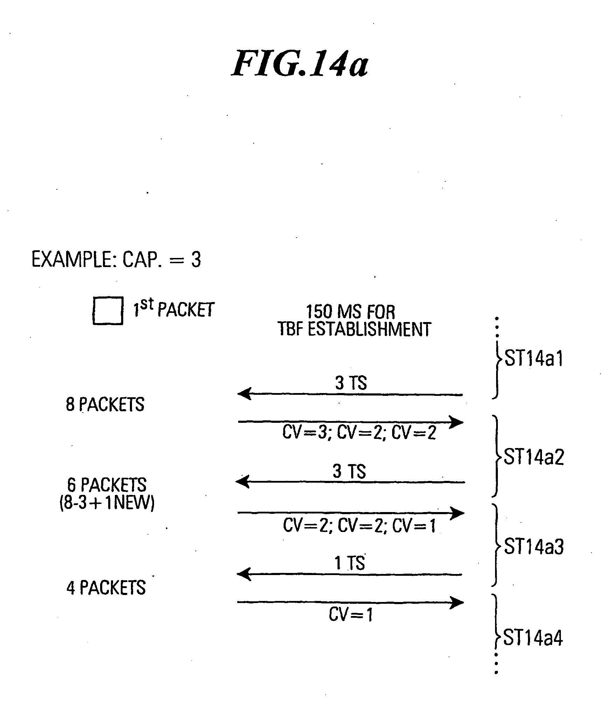

Fig. 14a is an example for a multislot capability 3 mobile station when the step ST82'' and step ST83'' in Fig. 8 are not used. Also in Fig. 14a it has been assumed that the removal frequency equals the arrival rate of data packets. In step ST14a1 three timeslots 3TS, i.e. the maximum number of timeslots, were assigned. It is assumed that within the time interval of 150 ms 8 data packets have arrived in the transmitter queue.

Therefore, in step ST14a2 three data packets in three different timeslots can be transmitted having counter values CV = 3, CV = 2, CV = 2. Since no counter value CV satisfies the relationship in step ST82', in step ST14a2 once more three timeslots 3TS are assigned.

Thus, in step ST14a3 6 data packets = 8 data packets - 3 data packets + 1 new data packet are available in a transmitter queue. In step ST14a3 three data packets with CV = 2, CV = 2, CV = 1 are transmitted. Therefore, the question in step ST82' is answered with "Y" and - since it is assumed in Fig. 14a that step ST82'' and step ST83'' are not present - step ST84 will only assign one timeslot 1TS in step ST14a3.

Since three data packets have been transferred in step ST14a3 and one further data packet has arrived, in step ST14a4 four data packets are available in a transmitter queue. Since four data packets are available in a multislot capability 3 mobile station and only one timeslot 1TS is assigned, a single data packet with CV = 1 (CV=(4-1)/3=1) is transmitted in step ST14a4.

It can be clearly seen from Fig 14a that the single occurrence of CV = 1 has caused to only assign one timeslot in step ST84 and thus an unnecessary large number of data packets is still available in the transmitter queue after ST14a4.

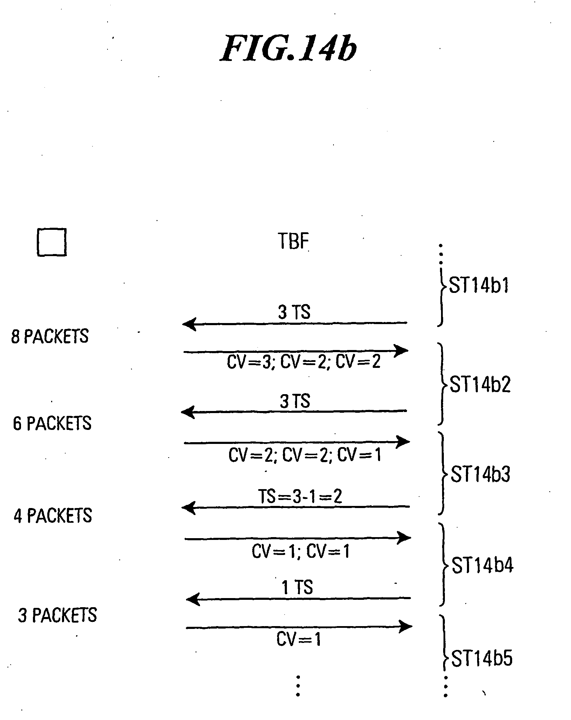

Fig. 14b shows the decreasing of timeslots for more rapidly reducing the transmitter queue, by using the step ST82'' and the step ST83''. Steps ST14b1, ST14b2 in Fig. 14b correspond to the steps ST14a1, ST14a2 in Fig. 14a. Therefore, in step ST14b3 three data packets with CV = 2, CV = 2, CV = 1 are transmitted. However, by contrast to Fig. 14a, it is now decided in step ST82'' that at least one counter value CV satisfies CV > 1 (namely, two counter values CV are CV =2) and therefore, the number of timeslots are assigned in accordance with step ST83'', i.e.

```
Assignment = multislot capability - number of CV = 1.
```

As indicated in step ST14b3 the new number of timeslots assigned is 3 (multislot capability) - 1 (CV = 1 once) = 2. Therefore, in step ST14b4 there can still be transmitted two data packets (two timeslots are available) and both of them will be transferred with a counter value CV = 1. Since both counter values are CV = 1, step ST82'' will be answered with "N" and therefore, step ST14b4 again assigns only one timeslot 1TS.

As can be seen from the comparison of Fig. 14a and Fig. 14b, the rule defined in step ST82'' and step ST83'', namely that if at least one CV = 1 and one CV > 1 then the assignment of timeslots will be the multislot capability minus the number of CV = 1, the speed of reduction of existing packets in the transmitter queue can be increased.

Of course, the above examples are only an illustration of how the network resource controller can increase or decrease the number of timeslots for the next uplink frame without emptying the transmitter queue. Therefore, on the basis of the indicated length information (counter value) the transmission controller can increase or decrease or keep constant the number of timeslots such that even in the worst case still one data packet remains in the transmitter queue during an active data packet arrival period in which data packets arrive in said transmitter buffer queue.

Of course, it will be appreciated that the increasing and decreasing of the number of timeslots will be most accurate for single slot terminals because here the counter value CV directly indicates the number of remaining data packets in the transmitter queue. Nevertheless, it is possible by exactly monitoring the CV value of the last packets to increase the precision. That is, even for a multislot class of higher order, the network controller can repeatedly evaluate the counter values CV over several uplink frames and can thus obtain a higher precision about the actual available number of data packets in the transmitter queue.

Furthermore, as already mentioned above, the minimum number of time slots to which the resources are set for the next uplink frame may also be zero, for example in the case when the removal frequency of the data packets from the queue is higher than the actual arrival rate of data packets into the queue something that can be estimated with the estimation process described below.

**ESTIMATION OF DATA PACKET ARRIVAL RATE**

Fig. 15 shows another embodiment of the invention for estimating the arrival rate of data packets in the transmitter queue on the network side.

As explained above with reference to Fig. 8 and the examples, the network side NS increases or decreases or keeps constant the number of timeslots TS or the next uplink TDMA frame on the basis of an evaluation of the counter value(s) CV.

However, the counter value CV cannot only be used for adjusting the number of timeslots, but it can also be used for providing a rough estimate of the data packet arrival rate in the transmitter queue as will be explained hereinafter. The estimation of the arrival rate at the sender queue can be used for an adaption of the minimum assignment of timeslots to the estimated arrival rate.

Fig. 15 shows a simple example for a multislot capability 1 mobile station having a removal frequency from the transmission buffer of 1/20 ms. The arrival rate is assumed to be constant and equal to 1/40 ms. The arrival rate estimator AR-EST (see Fig. 6) estimates the arrival rate on the basis of the received counter values CV within a measurement time interval.

As indicated in Fig. 15, a measurement time interval T of 60 ms is selected as an example. After assigning one timeslot 1TS in step ST151 it is assumed that the transmitter queue TR-QUE contains three data packets. Therefore, in step ST152 the first counter value received in the measurement time interval T is CV = 2. For a multislot capability 1 mobile station this exactly corresponds to two remaining data packets in the queue. Therefore, the estimator AR-EST estimates that before step ST152 (i.e. at the beginning of the measurement time interval T) a total number of three data packets where in the transmitter queue, i.e. the data packet starting number is Pan = 3.

Likewise, at the end of the measurement time interval T the estimator AR-EST estimates the final number of data packets in the transmission queue. Since the last received value of CV was CV = 1 in step ST158, the estimator AR-EST determines as the final number of remaining data packets Pen = 2.

Furthermore, the network side estimator AR-EST can determine how many data packets were transferred in the time T, on the basis of the assigned timeslots (in Fig. 15 it is assumed that one data packet always only occupies one timeslot TS). That is, the estimator AR-EST determines that in steps ST152, ST154 and ST156 a total number of NATS = 3 data packets have been transferred within the measurement time interval T.

As indicated with the black squares in Fig. 15, additional packets arrive in the transmitter queue TR-QUE at 10 ms and 50 ms, i.e. at a constant rate of 1/40 ms. On the basis of the determined values T, Pan (number of packets in the transmission buffer at the beginning of the measurement time interval T), Pen (number of packets in the transmission buffer at the end of the measurement time interval T)and NATS, the estimator AR-EST can now estimate the arrival rate on the basis of the following calculation:

$$\texttt{Arrival rate AR = (Pen + NATS - Pan)/T}$$

For the example in Fig. 15 this equation yields

$$\texttt{AR = (2 + 3-3)/60 ms = 1/30 ms (= 2/3 packets*1/20 ms).}$$

As can be seen, the arrival rate estimator AR-EST estimates the arrival rate to be 1/30 ms whilst the actual arrival rate is 1/40 ms. Despite using a multislot capability 1 mobile station (where the counter value CV really indicates the actual number of remaining packets) there still results an uncertainty of the estimation which is obviously due to the fact that the measurement and the packet arrival in the transmitter queue may not be synchronized. For example, since the network side arrival rate estimator AR-EST must set a starting point and an endpoint for the measurement time T, it might happen that the transmission of the packet in step ST152 is still included in the measurement or excluded. Therefore, even for a multislot capability 1 mobile station such an uncertainty exists.

Of course, the higher the multislot capability is the higher the uncertainty becomes due to the higher uncertainty of the number of packets indicated by the counter value CV. Furthermore, of course the network side arrival rate estimator AR-EST must take into account whether or not a single data packet is only transmitted in a single timeslot (as in the above examples) or whether in fact a data packet has its bits distributed over several data packets. However, a skilled person can derive such relationships on the basis of the above teaching for the special case of the multislot capability 1 mobile station and the provision that only one application PDU results in exactly one RLC PDU, i.e. no segmentation takes place.

Alternative methods of monitoring the arrival rate are of course the terminal monitoring of the rate and a signalling of the arrival rate to the network side NS. Alternatively, the network side NS arrival rate estimator AR-EST could evaluate time stamps provided on the data packets. Before coming to the special use of the determined (estimated) arrival rate AR, hereinafter a modification of the arrival rate estimation is described.

As already explained above, there is an uncertainty in the arrival rate estimation. The real arrival rate amounted to 1/40 ms and the estimated arrival rate was 1/30 ms, i.e. the network side would in such a case actually assume that more data packets are being provided in the transmitter queue than are actually existing. To make a more conservative estimation of the arrival rate, the arrival rate estimator AR-EST according to another embodiment of the invention can also use the following modified expression:

$$\texttt{Arrival rate AR = (Pin + NATS - Pan - 1)/T.}$$

For the above-described example, this value of AR amounts to AR = (2 + 3 - 3 - 1)/60 ms = 1/60 ms. Thus, the estimator AR-EST conservatively assumes that less data packets exist than are actually present in the transmitter queue which thus does not cause any problems with the transmitter queue emptying when timeslots TS are assigned in accordance with Fig. 8.

Based on the arrival rate estimation on the network side NS the resource scheduler SCH-RES can perform an adaption of the resource allocation on the basis of the estimated arrival rate. For example, if the transmission rate is 1/20 ms in Fig. 15, then the estimated rate AR = 2/3 packets*1/20 ms (1/30 ms) indicates that a minimum assignment = 2/3 packets per TDMA frame is possible. Therefore, the minimum assignment can be determined to be the transmission rate TR (assumed to be constant) divided by the estimated rate AR, i.e.

## MA (minimum assignment) = 20 ms/30 ms packets per TDMA frame.

If the minimum assignment of 1TS/TDMA frame still leads to TBF releases with subsequent re-establishments, the transmission resource scheduler SCH-RES can decide to decrease the minimum assignment MA, e.g. 1TS/2TDMA frame; 2TS/3TDMA frames etc. Alternatively, it is possible not to start with the full assignment in the beginning, i.e. transfer as many data packets, but start with 1TS/TDMA frame in order to avoid the possibility of emptying the queue already with the first assignment.

Thus, on the basis of the estimated arrival rate of data packets into the transmitter queue the resources controller SCH-RES can determine how many packets should be sent per TDMA frame, i.e. an even more accurate determination of the number of necessary timeslots TS can be made in order to minimise the number of packets queued at the sender side.

As mentioned above, it should be noted that also application PDU segmentation is possible. In the above explanation it was assumed that each data packet only occupies one timeslot. Therefore, the above described procedure and the examples below should only be taken as an illustration how an adjustment of the transmission resources can be made if indeed it is assumed that each application PDU results in exactly one RLC PDU. However, a skilled person can determine other reductions and increases of the transmission resources if the data packets are differently distributed over several timeslots on the uplink frame, or if segmentation applies.

Of course, the above examples are only an illustration of how the network resource controller can increase or decrease the number of timeslots for the next uplink frame without emptying the transmitter queue. Therefore, on the basis of the indicated length information (counter value) the transmission controller can increase or decrease or keep constant the number of timeslots such that even in the worst case still one data packet remains in the transmitter queue.

Of course, it will be appreciated that the increasing and decreasing of the number of timeslots will be best for single slot terminals because here the counter value CV directly indicates the number of remaining data packets in the transmitter queue. Nevertheless, it is possible by exactly monitoring the CV value of the last packets to increase the precision. That is, even for a multislot capability of higher order, the network controller can repeatedly evaluate the counter values CV over several uplink frames and can thus obtain a higher precision of the actual available number of data packets in the transmitter queue.

### INDUSTRIAL APPLICABILITY

As explained above, the variable adjustment of the transmission resources for the uplink frame transmission avoids unnecessary physical connection releases since the physical connection terminating device LC-TERM will only start a physical connection release procedure if an empty queue (zero length) is indicated in the length information. Therefore, the end-to-end delay, in particular for real-time application such as audio/speech transmission is reduced. The avoidance of unnecessary physical connection releases results also in a lower signalling load thus occupying less signalling resources in the network. Of course, the last data packet belonging to an active period is unnecessarily delayed. However, this is by far outweighed by the avoidance of unnecessary physical connection releases.

The above described determination and allocation of transmission resources in accordance with the invention further has the advantage that also (E)GPRS connections comprising mobile station equipment from various manufacturers can show an improved end-to-end delay because due to the allocation of the transmission resources it is always ensured that also the different types of mobile stations at least have one data packet present in the transmitter queue during an active data packet arrival period in which data packets arrive in said transmitter buffer queue. The invention has in particular the advantage that it can be implemented in any network, e.g. in a (E)GPRS network, without having to perform changes at the respective terminals because the resource control is entirely possible from the network side.

The transmission resources controller according to the invention can not only adapt (increase, decrease) the transmission resources for the next uplink TDMA frame, but it can also estimate the arrival rate of data packets into the transmitter queue on the basis of an evaluation of the counter values received within a measurement time interval. It is also possible that the transmission resources controller performs the increasing or decreasing of transmission resources, i.e. a minimum assignment, on the basis of the estimated arrival time.

Although in the above examples a GPRS system for packet transmission has been considered, the skilled person realizes that similar resource adjustment procedures can be implemented in other packet data communication systems. Therefore, a skilled person on the basis of the above teachings can perform further modifications and variations of the invention and all such modifications and variations are intended to fall in the scope of the attached claims. In particular, the invention can comprise embodiments which result from a combination of steps and features which have been separately described in the specification and/or claimed in the claims. Therefore, it should be understood that the above described embodiments are only the best mode of the invention presently conceived by the inventors.

Reference numerals in the claims only serve clarification purposes and do not limit the scope of these claims.

**Claims**

1. A network controller (NC) arranged on a network-side of a communication system (SYS) including on said network side (NS) a packet data communication system (SGSN; GGSN; Fig. 1) having a base station system (BSC, BTS; BSS, RLC), for transferring user data packets between a subscriber terminal (SS) side and said network side (NS), comprising the following features:

   **a0)** a network side receiver (NS-RC) adapted to receive user data packets transmitted from a transmitter buffer (TR-BUF) in said subscriber terminal (SS) side;

   **a1)** a device (NS-TR) adapted to provide an uplink radio communication link (UL, DL; e.g. Fig. 2, Fig. 4c, Fig. 9; Um) with radio resources between said subscriber terminal (SS) side and said base station system (BSC, BTS; BSS, RLC) on said network side (NS);

   **a2)** a physical connection controller (LC-MAIN, LC-TERM; MAC) adapted to provide a physical connection (TBF), used for transmitting said user data packets from said transmission buffer (TR-BUF), on said uplink radio communication link between said subscriber terminal (SS) side and said base station system (BSS) by scheduling (MAC; USF) said user data packets present in said transmission buffer (TR-BUF) as a number of radio (RLC/MAC) blocks on said radio resources (TS) on said radio communication link, said physical connection (TBF) indicating in the subscriber terminal (SS) side and the network side (NS) that the subscriber terminal (SS) side and the network side (NS) are included in the radio resources (TS) scheduling process a2) for transmitting said user data packets present in said transmission buffer (TR-BUF);

   **a4)** wherein said network side receiver (NS-RC) is adapted to receive said user data packets, present in said subscriber terminal (SS) side transmission buffer (TR-BUF), as said radio (RLC/MAC) blocks on said radio resources (TS) together with a transmitter queue (TR-QUE) length information (CV) indicating the length of the transmitter queue (TR-QUE) of user data packets in said transmission buffer (TR-BUF);

   **a52)** wherein said physical connection controller (LC-MAIN, LC-TERM; MAC) is adapted to close said physical connection (TBF) if said transmitted transmitter queue (TR-QUE) length information (CV) indicates that no user data packets are present in said transmission buffer (TR-BUF); and

   **c11)** a network side transmission resources controller (SCHED-RES) adapted to determine, by evaluating said transmitter buffer length information (CV) and transmission resources (TS) requests from said subscriber terminal (SS) side, the radio resources (TS) to be used by said subscriber terminal (SS) side for said user data packet transfer on said uplink radio communication link (UL), and to send a corresponding radio resources control message (USF) to said subscriber terminal (SS) side;

   **c12)** wherein said network side transmission resources controller (SCHED-RES) is adapted to determine, during an active data packet arrival period, the radio resources (TS) on said uplink radio communication link to be used by said subscriber terminal (SS) side for transmission for scheduling (MAC) of all minus one user data packets of the user data packets present in the transmitter buffer (TR-BUF) as a number of radio (RLC/MAC) blocks on said radio resources (TS) by evaluating said transmitter buffer (TR-BUF) length information (CV) wherein at least one user data packet remains in said (transmission buffer (TR-BUF);

   **c13)** wherein said active data packet arrival period is the time interval in which the inter-arrival times (TDIFF) of user data packets (DP) arriving in said transmission buffer (TR-BUF) to be transferred as said radio (RLC/MAC) blocks scheduled on said radio resources (TS) on said radio communication link (Um) are lower than a predetermined threshold.

2. A network controller according tp claim 1, *characterized by*
   a network side physical connection controller (LC-CTRL) including a physical connection maintaining device (LC-MAIN) for maintaining said physical connection (LC) when the received transmitter queue (TR-QUE) length information (CV) indicates (CV>0) a non-empty transmitter queue (TR-QUE) and a physical connection terminating device (LC-TERM) for terminating said physical connection (LC) when the determined transmitter queue (TR-QUE) information (CV) indicates (CV=0) an empty transmitter queue (TR-QUE).

3. A network controller according to claim 2, *characterized in that*
   said received length information (CV) is a counter value whose value CV corresponds to the length of the transmitter buffer queue (TR-QUE), said transmission resources are time slots on a TDMA uplink frame, said network side receiver (NS-RC) is adapted to receive one or more data packets and their associated counter values CV on the time slots said uplink frame, a CV evaluation means (CV-VAL) is provided to determine (ST82, ST82', ST82'') the value of each received counter value, and said network side transmission resources controller (SCH-RES) is adapted to assign as said network resources a predetermined number of time slots for the uplink frame.

4. A network controller according to claim 2 or 3, ***characterized in that***
said physical connection terminating device (LC-TERM) terminates (ST83) said physical connection (LC) when said CV evaluation means (CV-VAL) determines that at least one of said counter values has a value of CV=0.

5. A network controller according to claim 2 or 3, ***characterized in that***
said network side transmission resources controller (SCH-RES) assigns (ST83') the maximum admissible number of time slots (TS) when said CV evaluation means (CV-VAL) determines that all presently received counter values have a value of CV>1.

6. A network controller according to claim 2 or 3, ***characterized in that***
when said CV evaluation means (CV-VAL) determines that at least one counter value has a value of CV=1 and at least one counter value has a value of CV>1, said network side transmission resources controller (SCH-RES) assigns (ST83'') a new number of time slots NNTS in accordance with the following relationship:

$$\mathtt{NNTS \ = \ NTS \ - \ NO(CV=1)}$$

where NNTS is the new number of time slots for the next uplink frame, NTS is the multislot capability of the subscriber terminal and NO(CV=1) designates the number of counter values having a value of CV=1.

7. A network controller according to claim 2 or 3, ***characterized in that***
when said CV evaluation means (CV-VAL) determines that all presently received counter values have a value of CV=1, said network side transmission resources controller (SCH-RES) assigns (ST84) a minimum number of time slots.

8. A network controller according to claim 6,
***characterized in that*** said minimum number of time slots (TS) is one time slot (1TS) when the arrival rate of data packets into the transmitter buffer queue is higher or equal than the removal frequency of data packets from said transmitter buffer queue.

9. A network controller according to claim 1, **characterized by**
an arrival rate estimator (AR-EST) for estimating the arrival rate (AR) of data packets into the transmitter queue (TR-QUE) on the subscriber terminal side (MS) on the basis of the received counter values (CV) received within a measurement time interval (T).

10. A network controller according to claim 9, **characterized in that**
the transmission resources (TS) are further assigned on the basis of the estimated arrival rate (AR).

11. A network controller according to claim 10 and 7, ***characterized in that***
said minimum number of time slots (TS) is adjusted on the basis of the estimated arrival rate (AR).

12. A communication system (SYS) including on a network-side (SS) a network controller (NC) and a packet data communication system (SGSN; GGSN; Fig. 1) having a base station system (BSC, BTS; BSS, RLC), for transferring user data packets between a subscriber terminal (SS) side and said network side (NS) and on said subscriber terminal (SS) side on or more subscriber terminals (SS), including
on said subscriber terminal (SS) side:

   **i)** a subscriber terminal side transmitter buffer (TBUF) for buffering user data packets to be transmitted to the network side (NS) as transmitter queue (TR-QUE);
   **ii)** a subscriber terminal side transmitter queue length information setting means (CV-SET) for determining a transmitter queue (TR-QUE) length information (CV) indicating the length of the transmitter queue (TR-QUE) of user data packets in said transmitter queue (TR-QUE); and
   **iii)** a subscriber terminal side transmitter (SS-TR) for transmitting together with each user data packet (DPn) from said transmitter queue (TR-QUE) said length information (CV) to the network side (NS);

**iv)** said subscriber terminal side transmitter (SS-TR) including a device (NS-TR) adapted to provide an uplink radio communication link (UL, DL; e.g. Fig. 2, Fig. 4c, Fig. 9; Um) with radio resources between said subscriber terminal (SS) side and said base station system (BSC, BTS; BSS, RLC) on said network side (NS);

a subscriber terminal (SS) side physical connection controller (LC-MAIN, LC-TERM; MAC) adapted to provide a physical connection (TBF), used for transmitting said user data packets from said transmission buffer (TR-BUF), on said uplink radio communication link between said subscriber terminal (SS) side and said base station system (BSS) by scheduling (MAC; USF) said user data packets present in said transmission buffer (TR-BUF) as a number of radio (RLC/MAC) blocks on said radio resources (TS) on said radio communication link in response to a radio resources (TS) control message (USF) received from said network-side network controller (NC);

a radio resources (TS) request device for transmitting to said network-side (NS) radio (TS) resources requests to request from the network-side the indication of radio resources (TS) to be used in connection with said scheduling of user data packets as radio blocks on said transmission resources; and

v) a transmitter buffer monitoring device (QUE-MON) adapted to monitor the inter-arrival time (TDIFF) of user data packets (DP) arriving in said transmission buffer (TR-BUF) to be transferred as said radio (RLC/MAC) blocks scheduled on said radio resources (TS) on said radio communication link (Um); and

to determine as an active data packet arrival period (AP) the time interval in which the monitored inter-arrival times (TDIFF) are lower than a predetermined threshold, and said network controller (NC) including:

**a0)** a network side receiver (NS-RC) adapted to receive said user data packets transmitted from said transmitter buffer (TR-BUF);

**a1)** a device (NS-TR) adapted to provide, in connection with the corresponding device in said subscriber terminal (SS) side, said uplink radio communication link (UL, DL; e.g. Fig. 2, Fig. 4c, Fig. 9; Um) with radio resources between said subscriber terminal (SS) side and said base station system (BSC, BTS; BSS, RLC) on said network side (NS);

**a2)** a network-side (NS) physical connection controller (LC-MAIN, LC-TERM; MAC) adapted to provide said physical connection (TBF), used for transmitting said user data packets from said transmitter buffer (TR-BUF), in connection with said subscriber terminal (SS) side physical connection controller;

**a4)** wherein said network side receiver (NS-RC) is adapted to receive said user data packets, transmitted from said subscriber terminal (SS) side transmission buffer (TR-BUF), as said radio (RLC/MAC) blocks on said radio resources (TS), together with said transmitter queue (TR-QUE) length information (CV);

**a52)** wherein said physical connection controllers (LC-MAIN, LC-TERM; MAC) are adapted to close said physical connection (TBF) if said transmitted transmitter queue (TR-QUE) length information (CV) indicates that no user data packets are present in said transmission buffer (TR-BUF); and **c11)** a network side transmission resources controller (SCHED-RES) adapted to determine, by evaluating said transmitter buffer length information (CV), the radio resources (TS) to be used by said subscriber terminal (SS) side for said user data packet transfer on said uplink radio communication link (UL), and to send a corresponding radio resources control message (USF) to said subscriber terminal (SS) side;

**c12)** wherein during said active data packet arrival period, said network-side transmission resources controller (SCHED-RES) is adapted to determine the radio resources (TS) to be used by said subscriber terminal (SS) side physical connection controller (LC-MAIN, LC-TERM; MAC) for scheduling (MAC; USF) all minus one user data packets of the user data packets present in said transmission buffer (TR-BUF) as a number of radio (RLC/MAC) blocks on said radio resources (TS), by evaluating said transmitter buffer (TR-BUF) length information (CV), wherein at least one user data packet remains in said transmission buffer (TR-BUF).

**13.** A system according to claim 12,
   ***characterized in that***
   said length information setting means (CV-SET) is adapted to determine the number of remaining data packets (DP) of the transmitter queue (TR-QUE) and to set said transmitter queue (TR-QUE) length information (CV) in accordance with the determined number of data packets (DP).

**14.** A system according to claim 12,
   ***characterized in that***
   said length information (CV) is contained in the transmitted data packet (DP).

**15.** A system according to claim 13,
   ***characterized in that***
   said subscriber terminal side transmitter queue length information setting means (CV-SET) is adapted to set as said length information (CV) a counter value (CV) determined in accordance with the following expression:

$$CV = \text{round up } [(TBC-1)/NTS]$$

where:

CV: counter value transmitted to the network side;
TBC: total number of data packets (DP) present in the transmitter buffer (TR-BUF); and
NTS: transmission resources (TS) defined as the number of time slots (multislot capability NTS) in a single frame used for the data packet (DP) transfer on the uplink connection (UL).

**16.** A system according to claim 12,
**characterized by** a network side physical connection controller (LC-CTRL) including a physical connection maintaining device (LC-MAIN) adapted to maintain said physical connection (LC) when the received transmitter queue (TR-QUE) length information (CV) indicates (CV>0) a non-empty transmitter queue (TR-QUE) and a physical connection terminating device (LC-TERM) adapted to terminate said physical connection (LC) when the determined transmitter queue (TR-QUE) information (CV) indicates (CV=0) an empty transmitter queue (TR-QUE).

**17.** A system according to claim 12,
**characterized in that**
said received length information (CV) is a counter value whose value CV corresponds to the length of the transmitter buffer queue (TR-QUE), said transmission resources are time slots on a TDMA uplink frame, said network side receiver (NS-RC) is adapted to receive one or more data packets and their associated counter values CV on the time slots said uplink frame, a CV evaluation means (CV-VAL) is provided to determine (ST82, ST82', ST82") the value of each received counter value, and said network side transmission resources controller (SCH-RES) is adapted to assign as said network resources a predetermined number of time slots for the uplink frame.

**18.** A system according to claim 16,
**characterized in that**
said physical connection terminating device (LC-TERM) terminates (ST83) said physical connection (LC) when said CV evaluation means (CV-VAL) determines that at least one of said counter values has a value of CV=0.

**19.** A system according to claim 12 or 17,
**characterized in that** said network side transmission resources controller (SCH-RES) assigns (ST83') the maximum admissible number of time slots (TS) when said CV evaluation means (CV-VAL) determines that all presently received counter values have a value of CV>1.

**20.** A system according to claim 12 or 17,
**characterized in that**
when said CV evaluation means (CV-VAL) determines that at least one counter value has a value of CV=1 and at least one counter value has a value of CV>1, said network side transmission resources controller (SCH-RES) assigns (ST83") a new number of time slots NNTS in accordance with the following relationship:

$$NNTS = NTS - NO(CV=1)$$

where NNTS is the new number of time slots for the next uplink frame, NTS is the multislot capability of the subscriber terminal and NO(CV=1) designates the number of counter values having a value of CV=1.

**21.** A system according to claim 12 or 17,
**characterized in that**
when said CV evaluation means (CV-VAL) determines that all presently received counter values have a value of CV=1 said network side transmission resources controller (SCH-RES) assigns (ST84) a minimum number of time slots.

**22.** A system according to claim 21,
*characterized in that*
said minimum number of time slots (TS) is one time slot (1TS) when the arrival rate of data packets into the transmitter buffer queue is higher or equal than the removal frequency of data packets from said transmitter buffer queue.

**23.** A system according to claim 12,
**characterized by**
said network side transmission resources controller (SCH-RES) comprising an arrival rate estimator (AR-EST) for estimating the arrival rate (AR) of data packets into the transmitter queue (TR-QUE) on the subscriber terminal side (MS) on the basis of the received counter values (CV) received within a measurement time interval (T).

**24.** A system according to claim 23,
**characterized in that**
said transmission resources controller (SCH-RE) assigns the transmission resources on the basis of the estimated arrival rate (AR).

**25.** A system according to claim 24 and 21,
*characterized in that*
said minimum number of time slots (TS) is adjusted on the basis of the estimated arrival rate (AR).

**26.** A method for transferring, in a communication system (SYS) including on a network side (NS) a packet data communication system (SGSN; GGSN; Fig. 1) having a base station system (BSC, BTS; BSS, RLC), user data packets between a subscriber terminal (SS) side and said network side (NS), comprising the following steps:

    **a0)** receiving user data packets in a transmitter buffer (TR-BUF) in said subscriber terminal (SS) side;
    **a1)** providing an uplink radio communication link (UL, DL; e.g. Fig. 2, Fig. 4c, Fig. 9; Um) with radio resources (TS) between said subscriber terminal (SS) side and said base station system (BSC, BTS; BSS, RLC) on said network side (NS);
    **a2)** providing a physical connection (TBF), for transmitting said user data packets from said transmission buffer (TR-BUF), on said uplink radio communication link between said base station system (BSS) and said subscriber terminal (SS) side by scheduling (MAC) said user data packets present in said transmission buffer (TR-BUF) as a number of radio (RLC/MAC) blocks on said radio resources (TS) on said uplink radio communication link, said physical connection (TBF) indicating in the subscriber terminal (SS) side and the network side (NS) that the subscriber terminal (SS) side and the network side (NS) are included in the radio resources (TS) scheduling process a2) for transmitting said user data packets present in said transmission buffer (TR-BUF);
    **a3)** transmitting said user data packets present in said transmission buffer (TR-BUF) as said radio (RLC/MAC) blocks on said radio resources (TS) together with a transmitter queue (TR-QUE) length information (CV) indicating the length of the transmitter queue (TR-QUE) of user data packets in said transmission buffer (TR-BUF);
    **a52)** closing said physical connection (TBF) if said transmitted transmitter queue (TR-QUE) length information (CV) indicates that no user data packets are present in said transmission buffer (TR-BUF);
    **b1)** wherein in said step a0) the inter-arrival time (TDIFF) of user data packets (DP) arriving in said transmission buffer (TR-BUF) to be transferred as said radio (RLC/MAC) blocks scheduled on said radio resources (TS) on said radio communication link (Um) is monitored; and
    **b2)** as an active data packet arrival period (AP) the time interval in which the monitored inter-arrival times (TDIFF) are lower than a predetermined threshold, is determined; and
    **c11)** during said active data packet arrival period, determining (ST82, ST82', ST82"; ST83"), on said network-side (NS), radio resources (TS) on said uplink radio communication link for scheduling (MAC) of all minus one user data packets of the user data packets present in the transmitter buffer (TR-BUF) as a number of radio (RLC/MAC) blocks on said radio resources (TS) by evaluating said transmitter buffer (TR-BUF) length information (CV) and sending a corresponding radio resources control message (USF) to said subscriber terminal (SS) side; and
    **c12)** scheduling (MAC), on said subscriber terminal (SS) side on the basis of said radio resources control message (USF), said of all minus one user data packets present in the transmitter buffer (TR-BUF) as a number of radio (RLC/MAC) blocks on said determined radio resources (TS) wherein at least one user data packet remains in said transmission buffer (TR-BUF).

**27.** A method according to claim 26,
**characterized by**

determining the number of data packets (DP) of the transmitter queue (TR-QUE) and setting said transmitter queue (TR-QUE) length information (CV) in accordance with the determined number of data packets (DP).

**28.** A method according to claim 26 or 27,
*characterized by*
maintaining said physical connection (LC) when the received transmitter queue (TR-QUE) length information (CV) indicates (CV>0) a non-empty transmitter queue (TR-QUE) and terminating said physical connection (LC) when the determined transmitter queue (TR-QUE) information (CV) indicates (CV=0) an empty transmitter queue (TR-QUE).

**29.** A method according to claim 27,
*characterized in that*
determining on the subscriber terminal side (SS) said received length information (CV) as a counter value whose value CV corresponds to the length of the transmitter buffer queue (TR-QUE), assigning as said transmission resources time slots on a TDMA uplink frame, receiving on the network side one or more data packets and their associated counter values CV on said time slots of said uplink frame, determining (ST82, ST82', ST82") the value of each received counter value on the network side, and assigning as said network resources a predetermined number of time slots for the uplink frame.

**30.** A method according to claim 27,
*characterized by*
setting as said length information (CV) a counter value (CV) determined in accordance with the following expression:

$$\text{CV} \quad = \quad \text{round up } [(\text{TBC}-1)/\text{NTS}]$$

where:

CV: count value transmitted to the network side;
TBC: total number of data packets (DP) present in the transmitter buffer (TR-BUF); and
NTS: transmission resources (TS) defined as the number of time slots (multislot capability NTS) in a single frame used for the data packet (DP) transfer on the uplink connection (UL).

**31.** A method according to claim 26 or 30,
*characterized by*
including said length information (CV) in the transmitted data packet (DP).

**32.** A method according to claim 28,
*characterized in that*
terminating (ST83) said physical connection (LC) when it is determined that at least one of said counter values has a value of CV=0.

**33.** A method according to claim 27 or 29,
*characterized in that*
assigning (ST83') the maximum admissible number of time slots (TS) when it is determined that all presently received counter values have a value of CV>1.

**34.** A method according to claim 27 or 29,
*characterized in that*
when it is determined that at least one counter value has a value of CV=1 and at least one counter value has a value of CV>1, assigning (ST83") a new number of time slots NNTS in accordance with the following relationship:

$$\text{NNTS} = \text{NTS} - \text{NO}(\text{CV}=1)$$

where NNTS is the new number of time slots for the next uplink frame, NTS is the multislot capability of the subscriber terminal and NO(CV=1) designates the number of counter values having a value of CV=1.

**35.** A method according to claim 27 or 29,
*characterized in that*
when it is determined that all presently received counter values have a value of CV=1 a minimum number of time slots is assigned (ST84).

**36.** A method according to claim 35,
*characterized in that*
said minimum number of time slots (TS) is one time slot (1TS) when the arrival rate of data packets into the transmitter buffer queue is higher or equal than the removal frequency of data packets from said transmitter buffer queue.

**37.** A method according to claim 26,
**characterized by**
the following steps:

- estimating, at the start of a measurement time interval (T) on the network side (NS), an initial number of available packets (Pan) in the transmitter queue on the basis of a received counter value (CV);
- determining the number (NATS) of received data packets within said measurement time interval (T);
- estimating, at the end of the measurement time interval (T), the final number (Pen) of available data packets in the transmitter queue on the basis of another counter value (CV) received at the end of the measurement time interval (T); and
- estimating the arrival rate (AR) of data packets into the transmitter queue on the basis of the initial number (Pan) of packets, the number (NATS) of received data packets in the measurement time interval (T), the final number (Pen) of data packets and the measurement time interval (T).

**38.** A method according to claim 37,
**characterized in that**
the transmission resources (TS) are further assigned on the basis of the determined arrival rate (AR).

**39.** A method according to claim 38 and 35,
*characterized in that*
said minimum number of time slots (TS) is adjusted on the basis of the estimated arrival rate (AR).

**Patentansprüche**

**1.** Netzsteuerung (NC), die auf einer Netzseite eines Kommunikationssystems (SYS) angeordnet ist, das auf der Netzseite (NS) ein Paketdatenkommunikationssystem (SGSN; GGSN; Fig. 1) mit einem Basisstationssystem (BSC, BTS; BSS, RLC) zum Übertragen von Benutzerdatenpaketen zwischen einer Teilnehmerendeinrichtungs (SS)-Seite und der Netzseite (NS)umfasst, umfassend die folgenden Merkmale:

a0) einen netzseitigen Empfänger (NS-RC), der so ausgelegt ist, dass er Benutzerdatenpakete empfängt, die von einem Senderpuffer (TR-BUF) auf der Teilnehmerendeinrichtungs (SS)-Seite gesendet werden;
a1) eine Vorrichtung (NS-TR), die so ausgelegt ist, dass sie eine Aufwärtsfunkkommunikationsstrecke (UL, DL; z.B. Fig. 2, Fig. 4c, Fig. 9; Um) mit Funkbetriebsmitteln zwischen der Teilnehmerendeinrichtungs (SS)-Seite und dem Basisstationssystem (BSC, BTS; BSS, RLC) auf der Netzseite (NS) bereitstellt;
a2) eine physikalische Verbindungssteuereinheit (LC-MAIN, LC-TERM; MAC), die so ausgelegt ist, dass sie eine physikalische Verbindung (TBF) bereitstellt, die zum Senden der Benutzerdatenpakete vom Sendepuffer (TR-BUF) auf der Aufwärtsfunkkommunikationsstrecke zwischen der Teilnehmerendeinrichtungs (SS)-Seite und dem Basisstationssystem (BSS) durch zeitliches Steuern (scheduling) (MAC; USF) der im Sendepuffer (TR-BUF) vorhandenen Benutzerdatenpakete als eine Anzahl von Funk (RLC/MAC)-Blöcken auf den Funkbetriebsmitteln (TS) auf der Funkkommunikationsstrecke verwendet wird,
wobei die physikalische Verbindung (TBF) auf der Teilnehmerendeinrichtungs (SS)-Seite und der Netzseite (NS) angibt, dass die Teilnehmerendeinrichtungs (SS)-Seite und die Netzseite (NS) in den Funkbetriebsmittel (TS)-Zeitsteuerungsprozess a2) zum Senden der im Sendepuffer (TR-BUF) vorhandenen Benutzerdatenpakete einbezogen sind;
a4) wobei der netzseitige Empfänger (NS-RC) so ausgelegt ist, dass er die im teilnehmerendeinrichtungs (SS)-seitigen Sendepuffer (TR-BUF) vorhandenen Benutzerdatenpakete als die Funk (RLC/MAC)-Blöcke auf den Funkbetriebsmitteln (TS) zusammen mit einer Senderwarteschlangen (TR-QUE)-Längeninformation (CV) empfängt, die die Länge der Senderwarteschlange (TR-QUE) von Benutzerdatenpaketen im Sendepuffer (TR-BUF) angibt;

a52) wobei die physikalische Verbindungssteuereinheit (LC-MAIN, LC-TERM; MAC) so ausgelegt ist, dass sie die physikalische Verbindung (TBF) schließt, wenn die gesendete Senderwarteschlangen (TR-QUE)-Längeninformation (CV) angibt, dass keine Benutzerdatenpakete im Sendepuffer (TR-BUF) vorhanden sind; und

c11) eine netzseitige Übertragungsbetriebsmittelsteuereinheit (SCHED-RES), die so ausgelegt ist, dass sie durch Auswerten der Senderpufferlängeninformation (CV) und der Übertragungsbetriebsmittel (TS)-Anforderungen von der Teilnehmerendeinrichtungs (SS)-Seite die Funkbetriebsmittel (TS) bestimmt, die durch die Teilnehmerendeinrichtungs (SS)-Seite für den Benutzerdatenpakettransfer auf der Aufwärtsfunkkommunikationsstrecke (UL) verwendet werden sollen, und dass sie eine entsprechende Funkbetriebsmittelsteuerungsnachricht (USF) an die Teilnehmerendeinrichtungs (SS)-Seite sendet;

c12) wobei die netzseitige Übertragungsbetriebsmittelsteuereinheit (SCHED-RES) so ausgelegt ist, dass sie während einer aktiven Datenpaketankunftsperiode die Funkbetriebsmittel (TS) auf der Aufwärtsfunkkommunikationsstrecke, die durch die Teilnehmerendeinrichtungs (SS)-Seite zur Übertragung verwendet werden soll, zum zeitlichen Steuern (MAC) aller Benutzerdatenpakete außer einem der im Senderpuffer (TR-BUF) vorhandenen Datenpakete als eine Anzahl von Funk (RLC/MAC)-Blöcken auf den Funkbetriebsmitteln (TS) durch Auswerten der Senderpuffer (TR-BUF)-Längeninformation (CV) bestimmt, wobei wenigstens ein Benutzerdatenpaket im Sendepuffer (TR-BUF) bleibt;

c13) wobei die aktive Datenpaketankunftsperiode das Zeitintervall ist, in welchem die Zwischenankunftszeiten (TDIFF) von Benutzerdatenpaketen (DP), die im Sendepuffer (TR-BUF) ankommen und als die Funk (RLC/MAC)-Blöcke gesendet werden sollen, die auf den Funkbetriebsmitteln (TS) auf der Funkkommunikationsstrecke (Um) zeitlich gesteuert werden, kürzer als eine vorgegebene Schwelle sind.

2. Netzsteuerung nach Anspruch 1,

**gekennzeichnet durch**

eine netzseitige physikalische Verbindungssteuereinheit (LC-CTRL), die eine physikalische Verbindungsaufrechterhaltungsvorrichtung (LC-MAIN) zum Aufrechterhalten der physikalischen Verbindung (LC), wenn die empfangene Senderwarteschlangen (TRE-QUE)-Längeninformation (CV) eine nicht leere Senderwarteschlange (TR-QUE) angibt (CV > 0), und eine physikalische Verbindungsbeendigungsvorrichtung (LC-TERM) zum Beenden der physikalischen Verbindung, wenn die bestimmte Senderwarteschlangen (TR-QUE)-Information (CV) eine leere Senderwarteschlange (TR-QUE) angibt (CV = 0), umfasst.

3. Netzsteuerung nach Anspruch 2,

**dadurch gekennzeichnet, dass**

die empfangene Längeninformation (CV) ein Zählerwert ist, dessen Wert CV der Länge der Senderpufferwarteschlange (TR-QUE) entspricht, die Übertragungsbetriebsmittel Zeitschlitze auf einem TDMA-Aufwärtsrahmen sind, der netzseitige Empfänger (NS-RC) so ausgelegt ist, dass er ein oder mehr Datenpakete und ihre zugehörigen Zählerwerte CV auf den Zeitschlitzen des Aufwärtsrahmens empfängt, ein CV-Bewertungsmittel (CV-VAL) vorgesehen ist, um den Wert jedes empfangenen Zählerwerts zu bestimmen (ST82, ST82', ST82"), und die netzseitige Übertragungsbetriebsmittelsteuereinheit (SCH-RES) so ausgelegt ist, dass sie als die Netzbetriebsmittel eine vorgegebene Anzahl von Zeitschlitzen für den Aufwärtsrahmen zuordnet.

4. Netzsteuerung nach Anspruch 2 oder 3,

**dadurch gekennzeichnet, dass**

die physikalische Verbindungsbeendigungsvorrichtung (LC-TERM) die physikalische Verbindung (LC) beendet (ST83), wenn das CV-Bewertungsmittel (CV-VAL) bestimmt, dass wenigstens einer der Zählerwerte einen Wert von CV = 0 hat.

5. Netzsteuerung nach Anspruch 2 oder 3,

**dadurch gekennzeichnet, dass**

die netzseitige Übertragungsbetriebsmittelsteuereinheit (SCH-RES) die maximal zulässige Anzahl von Zeitschlitzen (TS) zuordnet (ST83'), wenn das CV-Bewertungsmittel (CV-VAL) bestimmt, dass alle gegenwärtig empfangenen Zählerwerte einen Wert von CV > 1 haben.

6. Netzsteuerung nach Anspruch 2 oder 3,

**dadurch gekennzeichnet, dass,**

wenn das CV-Bewertungsmittel (CV-VAL) bestimmt, dass wenigstens ein Zählerwert einen Wert von CV = 1 hat und wenigstens ein Zählerwert einen Wert von CV > 1 hat, die netzseitige Übertragungsbetriebsmittelsteuereinheit (SCH-RES) eine neue Anzahl von Zeitschlitzen NNS gemäß der folgenden Beziehung zuordnet (ST83"):

$$NNTS = NTS - NO(CV = 1)$$

wobei NNTS die neue Anzahl von Zeitschlitzen für den nächsten Aufwärtsrahmen ist, NTS die Mehrschlitzfähigkeit der Teilnehmerendeinrichtung ist und NO (CV = 1) die Anzahl von Zählerwerten mit einem Wert von CV = 1 bezeichnet.

7.  Netzsteuerung nach Anspruch 2 oder 3,
    **dadurch gekennzeichnet, dass,** wenn das CV-Bewertungsmittel (CV-VAL) bestimmt, dass alle gegenwärtig empfangenen Zählerwerte einen Wert von CV = 1 haben, die netzseitige Übertragungsbetriebsmittelsteuereinheit (SCH-RES) eine Mindestanzahl von Zeitschlitzen zuordnet (ST84).

8.  Netzsteuerung nach Anspruch 6,
    **dadurch gekennzeichnet, dass**
    die Mindestanzahl von Zeitschlitzen (TS) ein Zeitschlitz (1TS) ist, wenn die Ankunftsrate von Datenpaketen in der Senderpufferwarteschlange höher als oder gleich wie die Entnahmefrequenz von Datenpaketen aus der Senderpufferwarteschlange ist.

9.  Netzsteuerung nach Anspruch 1,
    **gekennzeichnet durch**
    einen Ankunftsratenschätzer (AR-ES) zum Schätzen der Ankunftsrate (AR) von Datenpaketen in der Senderwarteschlange (TR-QUE) auf der Teilnehmerendeinrichtungsseite (MS) auf der Basis der empfangenen Zählerwerte (CV), die innerhalb eines Messzeitintervalls (T) empfangen werden.

10. Netzsteuerung nach Anspruch 9,
    **dadurch gekennzeichnet, dass**
    die Übertragungsbetriebsmittel (TS) ferner auf der Basis der geschätzten Ankunftsrate (AR) zugeordnet werden.

11. Netzsteuerung nach Anspruch 10 und 7, **dadurch gekennzeichnet, dass**
    die Mindestanzahl von Zeitschlitzen (TS) auf der Basis der geschätzten Ankunftsrate (AR) eingestellt wird.

12. Kommunikationssystem (SYS), umfassend auf einer Netzseite (NS) eine Netzsteuerung (NC) und ein Paketdatenkommunikationssystem (SGSN; GGSN; Fig. 1) mit einem Basisstationssystem (BSC, BTS; BSS, RLC) zum Übertragen von Benutzerdatenpaketen zwischen einer Teilnehmerendeinrichtungs (SS)-Seite und der Netzseite (NS) und auf der Teilnehmerendeinrichtungs (SS)-Seite eine oder mehr Teilnehmerendeinrichtungen (SS), umfassend auf der Teilnehmerendeinrichtungs (SS)-Seite:

    i) einen teilnehmerendeinrichtungsseitigen Senderpuffer (TBUF) zum Puffern von Benutzerdatenpaketen, die an die Netzseite (NS) gesendet werden sollen, als Senderwarteschlange (TR-QUE);
    ii) ein teilnehmerendeinrichtungsseitiges Senderwarteschlangenlängeninformations-Einstellmittel (CV-SET) zum Bestimmen einer Senderwarteschlangen (TR-QUE)-Längeninformation (CV), die die Länge der Senderwarteschlange (TR-QUE) von Benutzerdatenpaketen in der Senderwarteschlange (TR-QUE) angibt; und
    iii) einen teilnehmerendeinrichtungsseitigen Sender (SS-TR) zum Senden der Längeninformation (CV) zusammen mit jedem Benutzerdatenpaket (DPn) aus der Senderwarteschlange (TR-QUE) an die Netzseite (NS);
    iv) wobei der teilnehmerendeinrichtungsseitige Sender (SS-TR) eine Vorrichtung (NS-TR) umfasst, die so ausgelegt ist, dass sie eine Aufwärtsfunkkommunikationsstrecke (UL, DL; z.B. Fig. 2, Fig. 4c, Fig. 9; Um) mit Funkbetriebsmitteln zwischen der Teilnehmerendeinrichtungs (SS)-Seite und dem Basisstationssystem (BSC, BTS; BSS, RLC) auf der Netzseite (NS) bereitstellt;
    eine teilnehmerendeinrichtungs (SS)-seitige physikalische Verbindungssteuereinheit (LC-MAIN, LC-TERM; MAC), die so ausgelegt ist, dass sie eine physikalische Verbindung (TBF) bereitstellt, die zum Senden der Benutzerdatenpakete vom Sendepuffer (TR-BUF) auf der Aufwärtsfunkkommunikationsstrecke zwischen der Teilnehmerendeinrichtungs (SS)-Seite und dem Basisstationssystem (BSS) durch zeitliches Steuern (scheduling) (MAC; USF) der im Sendepuffer (TR-BUF) vorhandenen Benutzerdatenpakete als eine Anzahl von Funk (RLC/MAC)-Blöcken auf den Funkbetriebsmitteln (TS) auf der Funkkommunikationsstrecke als Reaktion auf eine von der netzseitigen Netzsteuerung (NC) empfangenen Funkbetriebsmittel (TS)-Steuerungsnachricht (USF) verwendet wird;

eine Funkbetriebsmittel (TS)-Anforderungsvorrichtung zum Senden von Funkbetriebsmittel (TS)-Anforderungen an die Netzseite (NS), um von der Netzseite die Angabe von Funkbetriebsmitteln (TS) anzufordern, die in Verbindung mit der zeitlichen Steuerung von Benutzerdatenpaketen als Funkblöcke auf den Übertragungsbetriebsmitteln verwendet werden sollen; und

v) eine Senderpufferüberwachungsvorrichtung (QUE-MON), die so ausgelegt ist, dass sie die Zwischenankunftszeit (TDIFF) von Benutzerdatenpaketen überwacht, die im Sendepuffer (TR-BUF) ankommen um als die Funk (RLC/MAC)-Blöcke zeitlich gesteuert auf den Funkbetriebsmitteln (TS) auf der Funkkommunikationsstrekke (Um) gesendet zu werden; und dass sie als eine aktive Datenpaketankunftsperiode (AP) das Zeitintervall, in welchem die überwachten Zwischenankunftszeiten (TDIFF) kürzer als eine vorgegebene Schwelle sind, bestimmt, und

wobei die Netzsteuerung (NC) umfasst:

a0) einen netzseitigen Empfänger (NS-RC), der so ausgelegt ist, dass er die Benutzerdatenpakete empfängt, die vom Senderpuffer (TR-BUF) gesendet werden;

a1) eine Vorrichtung (NS-TR), die so ausgelegt ist, dass sie in Verbindung mit der entsprechenden Vorrichtung auf der Teilnehmerendeinrichtungs (SS)-Seite die Aufwärtsfunkkommunikationsstrecke (UL, DL; z.B. Fig. 2, Fig. 4c, Fig. 9; Um) mit Funkbetriebsmitteln zwischen der Teilnehmerendeinrichtungs (SS)-Seite und dem Basisstationssystem (BSC, BTS; BSS, RLC) auf der Netzseite (NS) bereitstellt;

a2) eine netzseitige (NS) physikalische Verbindungssteuereinheit (LC-MAIN, LC-TERM; MAC), die so ausgelegt ist, dass sie in Verbindung mit der teilnehmerendeinrichtungs (SS)-seitigen physikalischen Verbindungssteuereinheit die physikalische Verbindung (TBF) bereitstellt, die zum Senden der Benutzerdatenpakete vom Senderpuffer (TR-BUF) verwendet wird,

a4) wobei der netzseitige Empfänger (NS-RC) so ausgelegt ist, dass er die Benutzerdatenpakete, die vom teilnehmerendeinrichtungs (SS)-seitigen Sendepuffer (TR-BUF) als die Funk (RLC/MAC)-Blöcke auf den Funkbetriebsmitteln (TS) gesendet werden, zusammen mit der Senderwarteschlangen (TR-QUE)-Längeninformation (CV) empfängt;

a52) wobei die physikalische Verbindungssteuereinheiten (LC-MAIN, LC-TERM; MAC) so ausgelegt sind, dass sie die physikalische Verbindung (TBF) schließen, wenn die gesendete Senderwarteschlangen (TR-QUE)-Längeninformation (CV) angibt, dass keine Benutzerdatenpakete im Sendepuffer (TR-BUF) vorhanden sind; und

c11) eine netzseitige Übertragungsbetriebsmittelsteuereinheit (SCHED-RES), die so ausgelegt ist, dass sie durch Auswerten der Senderpufferlängeninformation (CV) die Funkbetriebsmittel (TS) bestimmt, die durch die Teilnehmerendeinrichtungs (SS)-Seite für den Benutzerdatenpakettransfer auf der Aufwärtsfunkkommunikationsstrecke (UL) verwendet werden sollen, und dass sie eine entsprechende Funkbetriebsmittelsteuerungsnachricht (USF) an die Teilnehmerendeinrichtungs (SS)-Seite sendet;

c12) wobei die netzseitige Übertragungsbetriebsmittelsteuereinheit (SCHED-RES) so ausgelegt ist, dass sie während der aktiven Datenpaketankunftsperiode die Funkbetriebsmittel (TS), die durch die teilnehmerendeinrichtungs (SS)-seitige physikalische Verbindungssteuereinheit (LC-MAIN, LC-TERM; MAC) zum zeitlichen Steuern (MAC; USF) aller Benutzerdatenpakete außer einem der im Sendepuffer (TR-BUF) vorhandenen Datenpakete als eine Anzahl von Funk (RLC/MAC)-Blöcken auf den Funkbetriebsmitteln (TS) verwendet werden sollen, durch Auswerten der Senderpuffer (TR-BUF)-Längeninformation (CV) bestimmt, wobei wenigstens ein Benutzerdatenpaket im Sendepuffer (TR-BUF) bleibt.

**13.** System nach Anspruch 12,
**dadurch gekennzeichnet, dass**
das Längeninformationseinstellmittel (CV-SET) so ausgelegt ist, dass es die Anzahl von restlichen Datenpaketen (DP) der Senderwarteschlange (TR-QUE) bestimmt und die Senderwarteschlangen (TR-QUE)-Längeninformation (CV) gemäß der bestimmten Anzahl von Datenpaketen (DP) einstellt.

**14.** System nach Anspruch 12,
**dadurch gekennzeichnet, dass**
die Längeninformation (CV) im gesendeten Datenpaket (DP) enthalten ist.

**15.** System nach Anspruch 13,
**dadurch gekennzeichnet, dass**
das teilnehmerendeinrichtungsseitige Senderwarteschlangenlängeninformations-Einstellmittel (CV-SET) so ausgelegt ist, dass es als die Längeninformation (CV) einen Zählerwert (CV) einstellt, der gemäß dem folgenden Ausdruck bestimmt wird:

$$CV = \text{aufrunden} \ [(TBC - 1)/NTS]$$

wobei:

CV: Zählerwert, der an die Netzseite gesendet wird;
TBC: Gesamtanzahl von Datenpaketen (DP), die im Senderpuffer (TR-BUF) vorhanden sind; und
NTS: Übertragungsbetriebsmittel (TS), die als die Anzahl von Zeitschlitzen (Mehrschlitzfähigkeit NTS) in einem einzigen Rahmen definiert sind, der für den Datenpaket (DP)-Transfer auf der Aufwärtsverbindung (UL) verwendet wird.

16. System nach Anspruch 12,
    **gekennzeichnet durch**
    eine netzseitige physikalische Verbindungssteuereinheit (LC-CTRL), die eine physikalische Verbindungsaufrechterhaltungsvorrichtung (LC-MAIN), die so ausgelegt ist, dass sie die physikalische Verbindung (LC) aufrechterhält, wenn die empfangene Senderwarteschlangen (TRE-QUE)-Längeninformation (CV) eine nicht leere Senderwarteschlange (TR-QUE) angibt (CV > 0), und eine physikalische Verbindungsbeendigungsvorrichtung (LC-TERM), die so ausgelegt ist, dass sie die physikalische Verbindung beendet, wenn die bestimmte Senderwarteschlangen (TR-QUE)-Information (CV) eine leere Senderwarteschlange (TR-QUE) angibt (CV = 0), umfasst.

17. System nach Anspruch 12,
    **dadurch gekennzeichnet, dass**
    die empfangene Längeninformation (CV) ein Zählerwert ist, dessen Wert CV der Länge der Senderpufferwarteschlange (TR-QUE) entspricht, die Übertragungsbetriebsmittel Zeitschlitze auf einem TDMA-Aufwärtsrahmen sind, der netzseitige Empfänger (NS-RC) so ausgelegt ist, dass er ein oder mehr Datenpakete und ihre zugehörigen Zählerwerte CV auf den Zeitschlitzen des Aufwärtsrahmens empfängt, ein CV-Bewertungsmittel (CV-VAL) vorgesehen ist, um den Wert jedes empfangenen Zählerwerts zu bestimmen (ST82, ST82', ST82"), und die netzseitige Übertragungsbetriebsmittelsteuereinheit (SCH-RES) so ausgelegt ist, dass sie als die Netzbetriebsmittel eine vorgegebene Anzahl von Zeitschlitzen für den Aufwärtsrahmen zuordnet.

18. System nach Anspruch 16,
    **dadurch gekennzeichnet, dass**
    die physikalische Verbindungsbeendigungsvorrichtung (LC-TERM) die physikalische Verbindung (LC) beendet (ST83), wenn das CV-Bewertungsmittel (CV-VAL) bestimmt, dass wenigstens einer der Zählerwerte einen Wert von CV = 0 hat.

19. System nach Anspruch 12 oder 17,
    **dadurch gekennzeichnet, dass**
    die netzseitige Übertragungsbetriebsmittelsteuereinheit (SCH-RES) die maximal zulässige Anzahl von Zeitschlitzen (TS) zuordnet (ST83'), wenn das CV-Bewertungsmittel (CV-VAL) bestimmt, dass alle gegenwärtig empfangenen Zählerwerte einen Wert von CV > 1 haben.

20. System nach Anspruch 12 oder 17,
    **dadurch gekennzeichnet, dass,**
    wenn das CV-Bewertungsmittel (CV-VAL) bestimmt, dass wenigstens ein Zählerwert einen Wert von CV = 1 hat und wenigstens ein Zählerwert einen Wert von CV > 1 hat, die netzseitige Übertragungsbetriebsmittelsteuereinheit (SCH-RES) eine neue Anzahl von Zeitschlitzen NNTS gemäß der folgenden Beziehung zuordnet:

$$NNTS = NTS - NO(CV = 1)$$

wobei NNTS die neue Anzahl von Zeitschlitzen für den nächsten Aufwärtsrahmen ist, NTS die Mehrschlitzfähigkeit der Teilnehmerendeinrichtung ist und NO(CV = 1) die Anzahl von Zählerwerten mit einem Wert von CV = 1 bezeichnet.

21. System nach Anspruch 12 oder 17,
    **dadurch gekennzeichnet, dass,**

wenn das CV-Bewertungsmittel (CV-VAL) bestimmt, dass alle gegenwärtig empfangenen Zählerwerte einen Wert von CV = 1 haben, die netzseitige Übertragungsbetriebsmittelsteuereinheit (SCH-RES) eine Mindestanzahl von Zeitschlitzen zuordnet (ST84).

22. System nach Anspruch 21,
**dadurch gekennzeichnet, dass**
die Mindestanzahl von Zeitschlitzen (TS) ein Zeitschlitz (1TS) ist, wenn die Ankunftsrate von Datenpaketen in der Senderpufferwarteschlange höher als oder gleich wie die Entnahmefrequenz von Datenpaketen aus der Senderpufferwarteschlange ist.

23. System nach Anspruch 12,
**dadurch gekennzeichnet, dass** die netzseitige Übertragungsbetriebsmittelsteuereinheit (SCH-RES) einen Ankunftsratenschätzer (AR-ES) zum Schätzen der Ankunftsrate (AR) von Datenpaketen in der Senderwarteschlange (TR-QUE) auf der Teilnehmerendeinrichtungsseite (MS) auf der Basis der empfangenen Zählerwerte (CV), die innerhalb eines Messzeitintervalls (T) empfangen werden, umfasst.

24. System nach Anspruch 23,
**dadurch gekennzeichnet, dass**
die Übertragungsbetriebsmittelsteuereinheit (SCH-RES) die Übertragungsbetriebsmittel auf der Basis der geschätzten Ankunftsrate (AR) zuordnet.

25. System nach Anspruch 24 und 21,
**dadurch gekennzeichnet, dass**
die Mindestanzahl von Zeitschlitzen (TS) auf der Basis der geschätzten Ankunftsrate (AR) eingestellt wird.

26. Verfahren zur Übertragung in einem Kommunikationssystem (SYS), umfassend auf einer Netzseite (NS) ein Paketdatenkommunikationssystem (SGN; GGSN; Fig. 1) mit einem Basisstationssystem (BSC, BTS; BSS, RLC), von Benutzerdatenpaketen zwischen einer Teilnehmerendeinrichtungs (SS)-Seite und der Netzseite, umfassend die folgenden Schritte:

a0) Empfangen von Benutzerdatenpaketen in einem Senderpuffer (TR-BUF) auf der Teilnehmerendeinrichtungs (SS)-Seite;
a1) Bereitstellen einer Aufwärtsfunkkommunikationsstrecke (UL, DL; z.B. Fig. 2, Fig. 4c, Fig. 9; Um) mit Funkbetriebsmitteln (TS) zwischen der Teilnehmerendeinrichtungs (SS)-Seite und dem Basisstationssystem (BSC, BTS; BSS, RLC) auf der Netseite (NS);
a2) Bereitstellen einer physikalischen Verbindung (TBF) zum Senden von Benutzerdatenpaketen vom Sendepuffer (TR-BUF) auf der Aufwärtsfunkkommunikationsstrecke zwischen dem Basisstationssystem (BSS) und der Teilnehmerendeinrichtungs (SS)-Seite durch zeitliches Steuern (scheduling) (MAC) der im Sendepuffer (TR-BUF) vorhandenen Benutzerdatenpakete als eine Anzahl von Funk (RLC/MAC)-Blöcken auf den Funkbetriebsmitteln (TS) auf der Aufwärtsfunkkommunikationsstrecke,
wobei die physikalische Verbindung (TBF) auf der Teilnehmerendeinrichtungs (SS)-Seite und der Netzsite (NS) angibt, dass die Teilnehmerendeinrichtungs (SS)-Seite und die Netzseite (NS) in den Funkbetriebsmittel (TS)-Zeitsteuerungsprozess a2) zum Senden der im Sendepuffer (TR-BUF) vorhandenen Benutzerdatenpakete einbezogen sind;
a3) Senden der im Sendepuffer (TR-BUF) vorhandenen Benutzerdatenpakete als die Funk (RLC/MAC)-Blöcke auf den Funkbetriebsmitteln (TS) zusammen mit einer Senderwarteschlangen (TR-QUE)-Längeninformation (CV), die die Länge der Senderwarteschlange (TR-QUE) von Benutzerdatenpaketen im Sendepuffer (TR-BUF) angibt;
a52) Schließen der physikalischen Verbindung (TBF), wenn die gesendete Senderwarteschlangen (TR-QUE)-Längeninformation (CV) angibt, dass keine Benutzerdatenpakete im Sendepuffer (TR-BUF) vorhanden sind;
b1) wobei in Schritt a0) die Zwischenankunftszeit (TDIFF) von Benutzerdatenpaketen (DP), die im Sendepuffer (TR-BUF) ankommen um als Funk (RLC/MAC)-Blöcke zeitlich gesteuert auf den Funkbetriebsmitteln (TS) auf der Funkkommunikationsstrecke (Um) gesendet zu werden, überwacht wird; und
b2) das Zeitintervall, in welchem die überwachten Zwischenankunftszeiten (TDIFF) kürzer als eine vorgegebene Schwelle sind, als eine aktive Datenpaketankunftsperiode (AP) bestimmt wird; und
c11) Bestimmen (ST82, ST82', ST82", ST82'''), während der aktiven Datenpaketankunftsperiode, auf der Netz-seite (NS) von Funkbetriebsmittel (TS) auf der Auswärtsfunkkommunikationsstrecke zum zeitlichen Steuern (MAC) aller Benutzerdatenpakete außer einem der im Senderpuffer (TR-BUDF) vorhandenen Benutzerdatenpakete als eine Anzahl von Funk (RLC/MAC)-Blöcken auf den Funkbetriebsmitteln (TS) durch Auswerten der Senderpuffer (TR-QUE)-Längeninformation (CV) und Senden einer entsprechenden Funkbetriebsmittelsteuerungsnachricht (USF) an die Teilnehmerendeinrichtungs (SS)-Seite; und

c12) zeitliches Steuern (MAC) auf der Teilnehmerendeinrichtungs (SS)-Seite auf der Basis der Funkbetriebsmittelsteuerungsnachricht (USF) aller der im Senderpuffer (TR-BUF) vorhandenen Benutzerdatenpakete außer einem als eine Anzahl von Funk (RLC/MAC)-Blöcken auf den bestimmten Funkbetriebsmitteln (TS), wobei wenigstens ein Benutzerdatenpaket im Sendepuffer (TR-BUF) bleibt.

**27.** Verfahren nach Anspruch 26,
**gekennzeichnet durch**
Bestimmen der Anzahl von Datenpaketen (DP) der Senderwarteschlange (TR-QUE) und Einstellen der Senderwarteschlangen (TR-QUE)-Längeninformation (CV) gemäß der bestimmten Anzahl von Datenpaketen (DP).

**28.** Verfahren nach Anspruch 26 oder 27,
**gekennzeichnet durch**
Aufrechterhalten der physikalischen Verbindung (LC), wenn die empfangene Senderwarteschlangen (TRE-QUE)-Längeninformation (CV) eine nicht leere Senderwarteschlange (TR-QUE) angibt (CV > 0), und Beenden der physikalischen Verbindung, wenn die bestimmte Senderwarteschlangen (TR-QUE)-Information (CV) eine leere Senderwarteschlange (TR-QUE) angibt (CV = 0).

**29.** Verfahren nach Anspruch 27,
**gekennzeichnet durch**
Bestimmen auf der Teilnehmerendeinrichtungs (SS)-Seite der empfangenen Längeninformation (CV) als einen Zählerwert, dessen Wert CV der Länge der Senderpufferwarteschlange (TR-QUE) entspricht, Zuordnen von Zeitschlitzen auf einem TDMA-Aufwärtsrahmen als die Übertragungsbetriebsmittel, Empfangen auf der Netzseite eines oder mehrerer Datenpakete und ihrer zugehörigen Zählerwerte CV auf den Zeitschlitzen des Aufwärtsrahmens, Bestimmen (ST82, ST82', ST82'') des Wertes jedes empfangenen Zählerwerts auf der Netzseite und Zuordnen einer vorgegebenen Anzahl von Zeitschlitzen für den Aufwärtsrahmen als die Netzbetriebsmittel.

**30.** Verfahren nach Anspruch 27,
**gekennzeichnet durch**
Einstellen als die Längeninformation (CV) eines Zählerwerts (CV), der gemäß dem folgenden Ausdruck bestimmt wird:

$$CV = \text{aufrunden } [(TBC - 1)/NTS]$$

wobei:

CV: Zählerwert, der an die Netzseite gesendet wird;
TBC: Gesamtanzahl von Datenpaketen (DP), die im Senderpuffer (TR-BUF) vorhanden sind; und
NTS: Übertragungsbetriebsmittel (TS), die als die Anzahl von Zeitschlitzen (Mehrschlitzfähigkeit NTS) in einem einzigen Rahmen definiert sind, der für den Datenpaket (DP)-Transfer auf der Aufwärtsverbindung (UL) verwendet wird.

**31.** Verfahren nach Anspruch 26 oder 30,
**gekennzeichnet durch**
Einbeziehen der Längeninformation (CV) in das gesendete Datenpaket (DP).

**32.** Verfahren nach Anspruch 28,
**gekennzeichnet durch**
Beenden (ST83) der physikalischen Verbindung (LC), wenn bestimmt wird, dass wenigstens einer der Zählerwerte einen Wert von CV = 0 hat.

**33.** Verfahren nach Anspruch 27 oder 29,
**gekennzeichnet durch**

Zuordnen (ST83') der maximal zulässigen Anzahl von Zeitschlitzen (TS), wenn bestimmt wird, dass alle gegenwärtig empfangenen Zählerwerte einen Wert von CV > 1 haben.

34. Verfahren nach Anspruch 27 oder 29,
**gekennzeichnet durch**
Zuordnen (ST83''), wenn bestimmt wird, dass wenigstens ein Zählerwert einen Wert von CV = 1 hat und wenigstens ein Zählerwert einen Wert von CV > 1 hat, einer neuen Anzahl von Zeitschlitzen NNTS gemäß der folgenden Beziehung:

$$\mathrm{NNTS = NTS - NO(CV = 1)}$$

wobei NNTS die neue Anzahl von Zeitschlitzen für den nächsten Aufwärtsrahmen ist, NTS die Mehrschlitzfähigkeit der Teilnehmerendeinrichtung ist und NO(CV = 1) die Anzahl von Zählerwerten mit einem Wert von CV = 1 bezeichnet.

35. Verfahren nach Anspruch 27 oder 29,
**dadurch gekennzeichnet, dass,**
wenn bestimmt wird, dass alle gegenwärtig empfangenen Zählerwerte einen Wert von CV = 1 haben, eine Mindestanzahl von Zeitschlitzen zugeordnet wird (ST84).

36. Verfahren nach Anspruch 35,
**dadurch gekennzeichnet, dass**
die Mindestanzahl von Zeitschlitzen (TS) ein Zeitschlitz (1TS) ist, wenn die Ankunftsrate von Datenpaketen in der Senderpufferwarteschlange höher als oder gleich wie die Entnahmefrequenz von Datenpaketen aus der Senderpufferwarteschlange ist.

37. Verfahren nach Anspruch 26,
**gekennzeichnet durch**
die folgenden Schritte:

- Schätzen am Beginn eines Messzeitintervalls (T) auf der Netzseite (NS) einer Anfangsanzahl von verfügbaren Paketen (Pan) in der Senderwarteschlange auf der Basis eines empfangenen Zählerwerts (CV);
- Bestimmen der Anzahl (NATS) von empfangenen Datenpaketen innerhalb des Messzeitintervalls (T);
- Schätzen am Ende des Messzeitintervalls (T) der Endanzahl (Pen) von verfügbaren Datenpaketen in der Senderwarteschlange auf der Basis eines anderen Zählerwerts (CV), der am Ende des Messzeitintervalls (T) empfangen wird; und
- Schätzen der Ankunftsrate (AR) von Datenpaketen in der Senderwarteschlange auf der Basis der Anfangsanzahl (Pan) von Paketen, der Anzahl (NATS) von empfangenen Datenpaketen im Messzeitintervall (T), der Endanzahl (Pen) von Datenpaketen und des Messzeitintervalls (T).

38. Verfahren nach Anspruch 37,
**dadurch gekennzeichnet, dass**
die Übertragungsbetriebsmittel (TS) ferner auf der Basis der bestimmten Ankunftsrate (AR) zugeordnet werden.

39. Verfahren nach Anspruch 38 und 35,
**dadurch gekennzeichnet, dass**
die Mindestanzahl von Zeitschlitzen (TS) auf der Basis der geschätzten Ankunftsrate (AR) eingestellt wird.

**Revendications**

1. Contrôleur de réseau (NC) agencé sur un côté de réseau d'un système de communication(SYS) incluant sur ledit côté réseau (NS) un système de communication de paquets de données (SGSN ;GGSN ;Fig.1) ayant un système de station de base (BSC,BTS ;BSS,RLC), pour transférer des paquets de données d'utilisateur entre un côté de terminal d'abonné (SS) et ledit côté réseau (NS), comprenant les caractéristiques suivantes :

a0) un récepteur côté réseau (NS-RC) adapté pour recevoir des paquets de données d'utilisateur transmis depuis une mémoire tampon d'émetteur (TR-BUF) dans ledit côté de terminal d'abonné (SS) ;

a1) un dispositif (NS-TR) adapté pour fournir une liaison de communication radio en liaison montante (UL,DL ; par ex. Fig.2, Fig.4c, Fig.9 ; Um) avec des ressources radio entre ledit côté de terminal d'abonné (SS) et ledit système de station de base (BSCN,BTS ;BSS,RLC) sur ledit côté de réseau (NS) ;

a2) un contrôleur de connexion physique( LC-MAIN,LC-TERM ;MAC) adapté pour fournir une connexion physique (TBF), utilisée pour transmettre lesdits paquets de données d'utilisateur depuis ladite mémoire tampon de transmission (TR-BUF), sur ladite liaison de communication radio en liaison montante entre ledit côté de terminal d'abonné (SS) et ledit système de station de base (BSS) en programmant (MAC ;USF) lesdits paquets de données d'utilisateur présents dans ladite mémoire tampon de transmission (TR-BUF) comme un certain nombre de blocs radio (RLC/MAC) sur lesdites ressources radio (TS) sur ladite liaison de communication radio, ladite connexion physique (TBF) indiquant dans le côté de terminal d'abonné (SS) et le côté de réseau (NS) que le côté de terminal d'abonné (SS) et le côté de réseau (NS) sont inclus dans le processus de programmation a2) de ressources radio (TS) pour transmettre lesdits paquets de données d'utilisateur présents dans ladite mémoire tampon de transmission (TR-BUF) ;

a4) dans lequel ledit récepteur de côté de réseau (NS-RC) est adapté pour recevoir lesdits paquets de données d'utilisateur, présents dans ladite mémoire tampon de transmission (TR-BUF) du terminal d'abonné (SS), comme lesdits blocs radio (RLC/MAC) sur lesdites ressources radio (TS) conjointement à une information de longueur (CV)de file d'attente d'émetteur (TR-QUE) indiquant la longueur de la file d'attente d'émetteur (TR-QUE) des paquets de données d'utilisateur dans ladite mémoire tampon de transmission (TR-BUF) ;

a52) dans lequel ledit contrôleur de connexion physique (LC-MAIN,LC-TERM ;MAC) est adapté pour fermer ladite connexion physique (TBF) si ladite information de longueur (CV) de file d'attente d'émetteur transmise (TR-QUE) indique que aucun paquet de données d'utilisateur n'est présent dans ladite mémoire tampon de transmission (TR-BUF) ; et

c11) un contrôleur de ressources de transmission du côté de réseau (SCHED-RES) adapté pour déterminer, en évaluant ladite information de longueur (CV) de mémoire tampon d'émetteur et les demandes de ressources de transmission (TS) émanant dudit côté de terminal d'abonné (SS), les ressources radio (TS) à utiliser par ledit côté de terminal d'abonné (SS) pour ledit transfert de paquets de données d'utilisateur sur ladite liaison de communication radio en liaison montante (UL), et pour envoyer un message de commande de ressources radio(USF) correspondant audit côté de terminal d'abonné (SS) ;

c12) dans lequel ledit contrôleur de ressources de transmission du côté de réseau (SCHED-RES) est adapté pour déterminer pendant une période active d'arrivée de paquets de données, les ressources radio (TS) sur ladite liaison de communication radio en liaison montante à utiliser par ledit côté de terminal d'abonné (SS) en vue de la transmission

pour programmer (MAC) tous les paquets de données d'utilisateur moins un des paquets de données d'utilisateur présents dans la mémoire tampon d'émetteur (TR-BUF) comme un certain nombre de blocs radio (RLC/MAC) sur lesdites ressources radio (TS) en évaluant ladite information de longueur (CV) de mémoire tampon d'émetteur (TR-BUF), dans lequel au moins un paquet de données d'utilisateur reste dans ladite mémoire tampon de transmission (TR-BUF) ;

c13) dans lequel ladite période active d'arrivée de paquets de données est l'intervalle de temps, dans lequel les temps entre les arrivées (TDIFF) de paquets de données d'utilisateur (DP) arrivant dans ladite mémoire tampon de transmission (TR-BUF) à transmettre comme lesdits blocs radio (RLC/MAC) programmés sur lesdites ressources radio (TS) sur ladite liaison de communication radio (Um) sont inférieurs à un seuil prédéterminé.

2. Contrôleur de réseau selon la revendication 1,
   **caractérisé par**
   un contrôleur de connexion physique du côté de réseau (LC-CTRL) incluant une dispositif de maintien de connexion physique (LC-MAIN) pour maintenir ladite connexion physique (LC) lorsque l'information de longueur (CV) de la file d'attente d'émetteur (TR-QUE) reçue indique (CV>0) une file d'attente d'émetteur non vide (TR-QUE) et un dispositif de terminaison de connexion physique (LC-TERM) pour mettre fin à ladite connexion physique (LC) lorsque l'information (CV) de file d'attente d'émetteur (TR-QUE) déterminée indique (CV=0) une file d'attente d'émetteur (TR-QUE) vide.

3. Contrôleur de réseau selon la revendication 2,
   **caractérisé en ce que**
   ladite information de longueur reçue (CV) est une valeur de compteur dont la valeur CV correspond à la longueur de la file d'attente de mémoire tampon d'émetteur (TR-QUE), lesdites ressources de transmission sont des intervalles de temps sur une trame de liaison montante TDMA, ledit récepteur du côté de réseau (NS-RC) est adapté pour recevoir un ou des paquets de données et leurs valeurs de compteur CV associées sur les intervalles de temps de ladite trame de liaison montante, un moyen d'évaluation de CV (CV-VAL) est prévu afin de déterminer (ST82,ST82', ST82'') la valeur de chaque valeur de compteur reçue, et ledit contrôleur de ressources de transmission du côté de réseau (SCH-RES) est adapté pour assigner comme lesdites ressources de réseau un nombre prédéterminé d'intervalles de temps pour la trame de liaison montante.

4. Contrôleur de réseau selon la revendication 2 ou 3,
   **caractérisé en ce que**
   ledit dispositif de terminaison de connexion physique (LC-TERM) met fin (ST83) à ladite connexion physique (LC) lorsque ledit moyen d'évaluation de CV (CV-VAL) détermine que au moins une desdites valeurs de compteur a une valeur de CV=0.

5. Contrôleur de réseau selon la revendication 2 ou 3,
   **caractérisé en ce que**
   ledit contrôleur de ressources de transmission du côté de réseau (SCH-RES) assigne (ST83') le nombre maximal admissible d'intervalles de temps (TS) lorsque ledit moyen d'évaluation de CV (CV-VAL) détermine que toutes les valeurs de compteur actuellement reçues ont une valeur de CV>1.

6. Contrôleur de réseau selon la revendication 2 ou 3,
   **caractérisé en ce que**
   lorsque ledit moyen d'évaluation de CV (CV-VAL) détermine que au moins une valeur de compteur a une valeur de CV=1 et au moins une valeur de compteur a une valeur de CV>1, ledit contrôleur de ressources de transmission du côté de réseau (SCH-RES) assigne (ST83") un nouveau nombre d'intervalles de temps NNTS selon la relation suivants :

$$NNTS = NTS - NO(CV=1)$$

où NNTS est le nouveau nombre d'intervalles de temps pour la trame de liaison montante suivante, NTS est la capacité à intervalles de temps multiples du terminal d'abonné et No(CV=1) désigne le nombre de valeurs de compteur ayant une valeur de CV=1.

7. Contrôleur de réseau selon la revendication 2 ou 3,
   **caractérisé en ce que**
   lorsque ledit moyen d'évaluation de CV (CV-VAL) détermine que toutes les valeurs de compteur actuellement reçues ont une valeur de CV=1, ledit contrôleur de ressources de transmission du côté de réseau (SCH-RES) assigne (ST84) un nombre minimal d'intervalles de temps.

8. Contrôleur de réseau selon la revendication 6,
   **caractérisé en ce que**
   ledit nombre minimal d'intervalles de temps (TS) est un intervalle de temps (1TS) lorsque le taux d'arrivée des paquets de données dans la file d'attente de mémoire tampon de transmission est supérieur ou égal à la fréquence de suppression des paquets de données de ladite file d'attente de mémoire tampon d'émetteur.

9. Contrôleur de réseau selon la revendication 1,
   **caractérisé par** un estimateur de taux d'arrivée (AR-EST) pour estimer le taux d'arrivée (AR) des paquets de données dans la file d'attente d'émetteur (TR-QUE) sur le côté de terminal d'abonné (MS) sur la base des valeurs de compteur (CV) reçues à l'intérieur d'un intervalle de temps de mesure (T).

10. Contrôleur de réseau selon la revendication 9,
    **caractérisé en ce que**
    les ressources de transmission (TS) sont en outre assignées sur la base du taux d'arrivée (AR) estimé.

11. Contrôleur de réseau selon la revendication 10 et 7,
    **caractérisé en ce que**
    ledit nombre minimal d'intervalle de temps (TS) est ajusté sur la base du taux d'arrivée (AR) estimé.

12. Système de communication (SYS) incluant sur un côté de réseau (SS) un contrôleur de réseau (NC) et un système de communication de paquets de données (SGSN, GGSN ; Fig.1) ayant un système de station de base (BSC, BTS ; BSS, RLC), pour transférer des paquets de données d'utilisateur entre un côté de terminal d'abonné (SS) et ledit côté de réseau (NS) et sur ledit côté de terminal d'abonné (SS) un ou des terminaux d'abonné (SS) incluant sur ledit côté de terminal d'abonné (SS)

    i) une mémoire tampon d'émetteur du côté de terminal d'abonné (TBUF) pour mettre en mémoire tampon des paquets de données d'utilisateur à transmettre au côté de réseau (NS) comme une file d'attente d'émetteur (TR-QUE) ;

    ii) un moyen de réglage d'information de longueur de file d'attente d'émetteur du côté de terminal d'abonné (CV-SET) pour déterminer une information de longueur (CV) de file d'attente d'émetteur (TR-QUE) indiquant la longueur de la file d'attente d'émetteur (TR-QUE) des paquets de données d'utilisateur dans ladite file d'attente d'émetteur (TR-QUE) ; et

    iii) un émetteur du côté de terminal d'abonné (SS-TR) pour transmettre conjointement à chaque paquet de données d'utilisateur (DPn) à partir de ladite file d'attente d'émetteur (TR-QUE) ladite information de longueur (CV) au côté de réseau (NS) ;

    iv) ledit émetteur du côté de terminal d'abonné (SS-TR) incluant un dispositif (NS-TR) adapté pour fournir une liaison de communication radio en liaison montante (UL,DL ;par ex. Fig.2, Fig.4c, Fig.9 ;Um) avec des ressources radio entre ledit côté de terminal d'abonné (SS) et ledit système de station de base (BSC,BTS ;BSS,RLC) sur ledit côté de réseau (NS) ;

    un contrôleur de connexion physique (LC-MAIN,LC-TERM ;MAC) du côté de terminal d'abonné (SS) adapté pour fournir une connexion physique (TBF), utilisé pour transmettre lesdits paquets de données d'utilisateur depuis ladite mémoire tampon de transmission (TR-BUF) sur ladite liaison de communication radio en liaison montante entre ledit côté de terminal d'abonné (SS) et ledit système de station de base (BSS) en programmant (MAC :USF) lesdits paquets de données d'utilisateur présents dans ladite mémoire tampon de transmission (TR-BUF) comme un certain nombre de blocs radio (RLC/MAC) sur lesdites ressources radio (TS) sur ladite liaison de communication radio en réponse à un message de commande (USF) de ressources radio (TS) reçu en provenance dudit contrôleur de réseau du côté réseau (NC) ;

    un dispositif de demande de ressources radio (TS) pour transmettre audit côté de réseau (NS) des demandes de ressources radio (TS) afin de demander au côté de réseau l'indication des ressources radio (TS) à utiliser en liaison avec ladite programmation des paquets de données d'utilisateur comme des blocs radio sur lesdites ressources de transmission ; et

    v) un dispositif de surveillance de mémoire tampon d'émetteur (QUE-MON) adapté pour surveiller le temps entre les arrivées (TDIFF) des paquets de données d'utilisateur (DP) arrivant dans ladite mémoire tampon de transmission (TR-BUF) à transférer comme lesdits blocs radio (RLC/MAC) programmés sur lesdites ressources radio (TS) sur ladite liaison de communication radio ; et

    pour déterminer comme une période active d'arrivée de paquets de données (AP) l'intervalle de temps , dans lequel les tepms entres les arrivées (TDIFF) surveillés sont inférieurs à un seuil prédéterminé, et

    ledit contrôleur de réseau (NC) incluant :

        a0) un récepteur côté réseau (NS-RC) adapté pour recevoir lesdits paquets de données d'utilisateur transmis depuis ladite mémoire tampon d'émetteur (TR-BUF)) ;

        a1) un dispositif (NS-TR) adapté pour fournir, en liaison avec le dispositif correspondant dans ledit côté de terminal d'abonné (SS), ladite liaison de communication radio en liaison montante (UL,DL ; par ex. Fig.2, Fig.4c, Fig.9 ; Um) avec des ressources radio entre ledit côté de terminal d'abonné (SS) et ledit système de station de base (BSCN,BTS ;BSS,RLC) sur ledit côté de réseau (NS) ;

        a2) un contrôleur de connexion physique(LC-MAIN,LC-TERM ;MAC) adapté pour fournir ladite connexion physique (TBF), utilisée pour transmettre lesdits paquets de données d'utilisateur depuis ladite mémoire tampon de transmission (TR-BUF), en liaison avec ledit contrôleur de connexion physique du côté de terminal d'abonné (SS) ;

        a4) dans lequel ledit récepteur de côté de réseau (NS-RC) est adapté pour recevoir lesdits paquets de données d'utilisateur transmis depuis ladite mémoire tampon de transmission (TR-BUF) du côté de terminal d'abonné (SS), comme lesdits blocs radio (RLC/MAC) sur lesdites ressources radio (TS) conjointement à une information de longueur (CV) de file d'attente d'émetteur (TR-QUE) ;

        a52) dans lequel lesdits contrôleurs de connexion physique (LC-MAIN,LC-TERM ;MAC) sont adaptés pour fermer ladite connexion physique (TBF) si ladite information de longueur (CV) de file d'attente d'émetteur transmise (TR-QUE) indique que aucun paquet de données d'utilisateur n'est présent dans ladite mémoire tampon de transmission (TR-BUF) ; et

        c11) un contrôleur de ressources de transmission du côté de réseau (SCHED-RES) adapté pour déterminer, en évaluant ladite information de longueur (CV) de mémoire tampon d'émetteur, les ressources radio (TS) à utiliser par ledit côté de terminal d'abonné (SS) pour ledit transfert de paquets de données d'utilisateur sur ladite liaison de communication radio en liaison montante (UL), et pour envoyer un message de commande de ressources radio(USF) correspondant audit côté de terminal d'abonné (SS) ;

c12) dans lequel, pendant ladite période active d'arrivée de paquets de données, ledit contrôleur de ressources de transmission du côté de réseau (SCHED-RES) est adapté pour déterminer les ressources radio (TS) à utiliser par ledit contrôleur de connexion physique (LC-MAIN,LC-TERM ;MAC) du côté de terminal d'abonné (SS) pour programmer (MAC ;USF) tous les paquets de données d'utilisateur moins un des paquets des données d'utilisateur présents dans ladite mémoire tampon de transmission (TR-BUF) comme un certain nombre de blocs radio (RLC/MAC) sur lesdites ressources radio (TS), en évaluant ladite information de longueur (CV) de mémoire tampon de transmission (TR-BUF), dans lequel au moins un paquet de données d'utilisateur reste dans ladite mémoire tampon de transmission (TR-BUF).

**13.** Système selon la revendication 12,
**caractérisé en ce que** ledit moyen de réglage (CV-SET) de l'information de longueur est adapté pour déterminer le nombre de paquets de données (DP) restants de la file d'attente d'émetteur (TR-QUE) et pour régler ladite information de longueur (CV) de file d'attente d'émetteur (TR-QUE) en fonction du nombre prédéterminé de paquets de données (DP).

**14.** Système selon la revendication 12,
**caractérisé en ce que**
ladite information de longueur (CV) est contenue dans le paquet de données (DP) transmis.

**15.** Système selon la revendication 13,
**caractérisé en ce que**
ledit moyen de réglage d'information de longueur de file d'attente d'émetteur du côté de terminal d'abonné (CV-SET) est adapté pour régler comme ladite information de longueur (CV) une valeur de compteur (CV) déterminée selon l'expression suivants :

$$CV = \text{aller-retour} \ [(TBC-1)/NTS]$$

où :

CV : valeur de compteur transmise au côté de réseau ;
TBC : nombre total de paquets de données présents dans la mémoire tampon d'émetteur (TR-BUF) ; et
NTS : ressources de transmission (TS) définies comme le nombre d'intervalles de temps (capacité à intervalles de temps multiples NTS) dans une trame unique utilisée pour le transfert de paquets de données (DP) sur la connexion en liaison montante (UL).

**16.** Système selon la revendication 12,
**caractérisé par**
un contrôleur de connexion physique du côté de réseau (LC-CTRL) incluant un dispositif de maintien de connexion physique (LC-MAIN) pour maintenir ladite connexion physique (LC) lorsque l'information de longueur (CV) de la file d'attente d'émetteur (TR-QUE) reçue indique (CV>0) une file d'attente d'émetteur non vide (TR-QUE) et un dispositif de terminaison de connexion physique (LC-TERM) pour mettre fin à ladite connexion physique (LC) lorsque l'information (CV) de file d'attente d'émetteur (TR-QUE) déterminée indique (CV=0) une file d'attente d'émetteur (TR-QUE) vide.

**17.** Système selon la revendication 12,
**caractérisé en ce que**
ladite information de longueur reçue (CV) est une valeur de compteur dont la valeur CV correspond à la longueur de la file d'attente de mémoire tampon d'émetteur (TR-QUE), lesdites ressources de transmission sont des intervalles de temps sur une trame de liaison montante TDMA, ledit récepteur du côté de réseau (NS-RC) est adapté pour recevoir un ou des paquets de données et leurs valeurs de compteur CV associées sur les intervalles de temps de ladite trame de liaison montante, un moyen d'évaluation de CV (CV-VAL) est prévu afin de déterminer (ST82,ST82', ST82'') la valeur de chaque valeur de compteur reçue, et ledit contrôleur de ressources de transmission du côté de réseau (SCH-RES) est adapté pour assigner comme lesdites ressources de réseau un nombre prédéterminé d'intervalles de temps pour la trame de liaison montante.

18. Système selon la revendication 16,
**caractérisé en ce que**
ledit dispositif de terminaison de connexion physique (LC-TERM) met fin (ST83) à ladite connexion physique (LC) lorsque le moyen d'évaluation de CV (CV-VAL) détermine que au moins une desdites valeurs de compteur a une valeur de CV=0.

19. Système selon la revendication 12 ou 17,
**caractérisé en ce que**
ledit contrôleur de ressources de transmission du côté de réseau (SCH-RES) assigne (ST83') le nombre maximal admissible d'intervalles de temps (TS) lorsque ledit moyen d'évaluation de CV (CV-VAL) détermine que toutes les valeurs de compteur actuellement reçues ont une valeur de CV>1.

20. Système selon la revendication 12 ou 17,
**caractérisé en ce que**
lorsque ledit moyen d'évaluation de CV (CV-VAL) détermine que au moins une valeur de compteur a une valeur de CV=1 et au moins une valeur de compteur a une valeur de CV>1, ledit contrôleur de ressources de transmission du côté de réseau (SCH-RES) assigne (ST83") un nouveau nombre d'intervalles de temps NNTS selon la relation suivants :

$$NNTS = NTS - NO(CV=1)$$

où NNTS est le nouveau nombre d'intervalles de temps pour la trame de liaison montante suivante, NTS est la capacité à intervalles de temps multiples du terminal d'abonné et No(CV=1) désigne le nombre de valeurs de compteur ayant une valeur de CV=1.

21. Système selon la revendication 12 ou 17,
**caractérisé en ce que**
lorsque ledit moyen d'évaluation de CV (CV-VAL) détermine que toutes les valeurs de compteur actuellement reçues ont une valeur de CV=1, ledit contrôleur de ressources de transmission du côté de réseau (SCH-RES) assigne (ST84) un nombre minimal d'intervalles de temps.

22. Système selon la revendication 21,
**caractérisé en ce que**
ledit nombre minimal d'intervalles de temps (TS) est un intervalle de temps (1TS) lorsque le taux d'arrivée des paquets de données dans la file d'attente de mémoire tampon de transmission est supérieure ou égale à la fréquence de suppression des paquets de données de ladite file d'attente de mémoire tampon d'émetteur.

23. Système selon la revendication 12,
**caractérisé par**
ledit contrôleur de ressources de transmission du côté de réseau (SCH-RES) comprenant un estimateur de taux d'arrivée (AR-EST) pour estimer le taux d'arrivée (AR) des paquets de données dans la file d'attente d'émetteur (TR-QUE) sur le côté de terminal d'abonné (SS) sur la base des valeurs de compteur (CV) reçues à l'intérieur d'un intervalle de temps de mesure (T).

24. Système selon la revendication 23,
**caractérisé en ce que**
ledit contrôleur de ressources de transmission (SCH-RE) assigne les ressources de transmission sur la base du taux d'arrivée (AR) estimé.

25. Système selon la revendication 24 et 21,
**caractérisé en ce que**
ledit nombre minimal d'intervalles de temps (TS) est ajusté sur la base du taux d'arrivée estimé (AR).

**26.** Procédé pour transférer, dans un système de communication (SYS) incluant sur un côté de réseau (NS) un système de communication de paquets de données (SGSN,GGSN ;Fig.1) ayant un système de station de base (BSC,BTS ; BSS,RLC), des paquets de données d'utilisateur entre un côté de terminal d'abonné (SS) et ledit côté de réseau (NS), comprenant les étapes suivantes :

   a0) recevoir des paquets de données d'utilisateur dans une mémoire tampon d'émetteur (TR-BUF) dans ledit côté de terminal d'abonné (SS) ;
   a1) fournir à une liaison de communication radio en liaison montante (UL,DL ;parex.Fig.2,Fig.4c,Fig.9 ;Um) des ressources radio (TS) entre ledit côté de terminal d'abonné (SS) et ledit système de station de base (BSC,BTS ; BSS,RLC) sur ledit côté de réseau (NS) ;
   a2) fournir une connexion physique (TBF), pour transmettre lesdits paquets de données d'utilisateur depuis ladite mémoire tampon de transmission (TR-BUF) sur ladite liaison de communication radio en liaison montante entre ledit système de station de base (BSS) et ledit côté de terminal d'abonné (Ss) en programmant (MAC) lesdits paquets de données d'utilisateur présents dans ladite mémoire tampon de transmission (TR-BUF) comme un certain nombre de blocs radio (RLC/MAC) sur lesdites ressources radio (TS) sur ladite liaison de communication radio en liaison montante,
   ladite connexion physique (TBF) indiquant dans le côté de terminal d'abonné (SS) et le côté de réseau (NS) que le côté de terminal d'abonné (SS) et le côté de réseau (NS) sont inclus dans le processus de programmation a2) de ressources radio (TS) pour transmettre lesdits paquets de données d'utilisateur présents dans ladite mémoire tampon de transmission (TR-BUF) ;
   a3) transmettre lesdits paquets de données d'utilisateur présents dans ladite mémoire tampon de transmission (TR-BUF) comme lesdits blocs radio (RLC/MAC) sur lesdites ressources radio (TS) conjointement à une information de longueur (CV) de file d'attente d'émetteur (TR-QUE) indiquant la longueur de la file d'attente d'émetteur (TR-QUE) des paquets de données d'utilisateur dans ladite mémoire tampon de transmission (TR-BUF) ;
   a52) fermer ladite connexion physique (TBF) si ladite information de longueur (CV) de file d'attente d'émetteur (TR-QUE) transmise indique que aucun paquet de données d'utilisateur n'est présent dans ladite mémoire tampon de transmission (TR-BUF) ;
   b1) dans lequel à ladite étape a0), le temps entre les arrivées (TDIFF) des paquets de données (DP) d'utilisateur arrivant dans ladite mémoire tampon de transmission (TR-BUF) à transférer comme lesdits blocs radio (RLC/MAC) programmés sur lesdites ressources radio (TS) sur ladite liaison de communication radio (Um) est surveillé ; et
   b2) l'intervalle de temps, dans lequel les temps entre les arrivées (TDIFF) surveillés sont inférieurs à un seuil prédéterminé, est déterminé comme une période active d'arrivée de paquets de données (AP) ; et
   c11) pendant ladite période active d'arrivée de paquets de données, déterminer (ST82,ST82',ST82'' ;ST83'), sur ledit côté de réseau (NS), les ressources radio (TS) sur ladite liaison de communication radio en liaison montante pour la programmation (MAC) de tous les paquets de donénes d'utilisateur moins un des paquets de donénes d'utilisateur présents dans la mémoire tampon d'émetteur (TR-BUF) comme un certain nombre de blocs radio (RLC/MAC) sur lesdites ressources radio (TS) en évaluant ladite information de longueur (CV) de mémoire tampon d'émetteur (TR-BUF), et envoyer un message de commande de ressources radio (USF) correspondant audit côté de terminal d'abonné (SS) ; et c12) programmer (MAC) sur ledit côté de terminal d'abonné (SS) sur la base dudit message de commande de ressources radio (USF), lesdits de tous les paquets de données d'utilisateur moins un présents dans la mémoire tampon d'émetteur (TR-BUF) comme un certain nombre de blocs radio (RLC/MAC) sur lesdites ressources radio (TS) déterminées, dans lequel au moins un paquet de données d'utilisateur reste dans ladite mémoire tampon de transmission (TR-BUF).

**27.** Procédé selon la revendication 26,
   **caractérisé par**
   la détermination du nombre de paquets de données (DP) de la file d'attente d'émetteur (TR-QUE) et le réglage de ladite information de longueur (CV) de file d'attente d'émetteur (TR-QUE) selon le nombre déterminé de paquets de donénes (DP).

**28.** Procédé selon la revendication 26 ou 27,
   **caractérisé par**
   le maintien de ladite connexion physique (LC) lorsque l'information de longueur (CV) de file d'attente d'émetteur (TR-QUE) indique (CV>0) une file d'attente d'émetteur (TR-QUE) non vide et la terminaison de ladite connexion physique (LC) lorsque l'information de longueur (CV) de la file d'attente d'émetteur (TR-QUE) déterminée indique (CV=0) une file d'attente d'émetteur (TR-QUE) vide.

**29.** Procédé selon la revendication 27,
**caractérisé par** la détermination sur le côté de terminal d'abonné (SS) de ladite information de longueur (CV) reçue comme une valeur de comptage dont la valeur CV correspond à la longueur de la file d'attente de mémoire tampon d'émetteur (TR-QUE), l'assignation comme lesdits intervalles de temps de ressources de transmission sur une trame de liaison montante TDMA, la réception sur le côté de réseau du ou des paquets de donénes et de leurs valeurs de compteur CV associées sur lesdits intervalles de temps de ladite trame de liaison montante, la détermination (ST82,ST82',ST82'') de la valeur de chaque valeur de compteur reçue sur le côté de réseau et l'assignation comme lesdites ressources de réseau d'un nombre prédéterminé d'intervalles de temps pour la trame de liaison montante.

**30.** Procédé selon la revendication 27,
**caractérisé par**
le réglage comme ladite information de longueur (CV) d'une valeur de compteur (CV) déterminée selon l'expression suivants :

$$CV = \text{aller-retour } [(TBC-1)/NTS]$$

où :

CV : valeur de compteur transmise au côté de réseau ;
TBC : nombre total de paquets de données présents dans la mémoire tampon d'émetteur (TR-BUF) ; et
NTS : ressources de transmission (TS) définies comme le nombre d'intervalles de temps (capacité à intervalles de temps multiples NTS) dans une trame unique utilisée pour le transfert de paquets de données (DP) sur la connexion en liaison montante (UL).

**31.** Procédé selon la revendication 26 ou 30,
**caractérisé par**
l'inclusion de ladite information de longueur (CV) dans le paquet de données (DP) transmis.

**32.** Procédé selon la revendication 28,
**caractérisé par**
la terminaison (ST83) de ladite connexion physique (LC) lorsqu'il est déterminé qua au moins une desdites valeurs de compteur a une valeur de CV=0.

**33.** Procédé selon la revendication 27 ou 29,
**caractérisé par**
l'assignation (ST83') du nombre maximal admissible d'intervalles de temps (GTS) lorsqu'il est déterminé que toutes les valeurs de compteur actuellement reçues ont une valeur de CV>1.

**34.** Procédé selon la revendication 27 ou 29,
**caractérisé par**
lorsqu'il est déterminé que au moins une valeur de compteur a une valeur de CV=1 et au moins une valeur de compteur a une valeur de CV>1, l'assignation (ST83'') d'un nouveau nombre d'intervalles de temps NNTS selon la relation suivante :

$$NNTS = NTS - NO(CV=1)$$

où NNTS est le nouveau nombre d'intervalles de temps pour la trame de liaison montante suivante, NTS est la capacité à intervalles de temps multiples du terminal d'abonné et No(CV=1) désigne le nombre de valeurs de compteur ayant une valeur de CV=1.

**35.** Procédé selon la revendication 27 ou 29,
**caractérisé en ce que**
lorsqu'il est déterminé que toutes les valeurs de compteur actuellement reçues ont une valeur de CV=1, un nombre minimal d'intervalles de temps est assigné (ST84).

**36.** Procédé selon la revendication 35,
**caractérisé en ce que**
ledit nombre minimal d'intervalles de temps (TS) est un intervalle de temps (1TS) lorsque le taux d'arrivée de paquets de données dans la file d'attente de mémoire tampon d'émetteur est supérieur ou égal à la fréquence de suppression des paquets de données de ladite file d'attente de mémoire tampon d'émetteur.

**37.** Procédé selon la revendication 26,
**caractérisé par**
les étapes suivantes consistant à

- estimer au début d'un intervalle de temps de mesure (T) sur le côté de réseau (NS), un nombre initial de paquets de données (Pan) dans la file d'attente d'émetteur sur la base d'une valeur de compteur (CV) reçue ;
- déterminer le nombre (NATS) de paquets de données reçus à l'intérieur dudit intervalle de temps de mesure (T) ;
- estimer, à la fin de l'intervalle de temps de mesure (T), le nombre final (Pen) de paquets de données disponibles dans la file d'attente d'émetteur sur la base d'une autre valeur de compteur (CV) reçue à la fin de l'intervalle de temps de mesure (T) ; et
- estimer le taux d'arrivée (AR) des paquets de données dans la file d'attente d'émetteur sur la base du nombre initial (Pan) de paquets, du nombre (NATS) de paquets de données reçus dans l'intervalle de temps de mesure (T), du nombre final (Pen) de paquets de donénes et de l'intervalle de temps de mesure (T).

**38.** Procédé selon la revendication 37,
**caractérisé en ce que**
les ressources de transmission (Ts) sont en outre assignées sur la base du taux d'arrivée (AR) déterminé.

**39.** Procédé selon la revendication 38 et 35,
**caractérisé en ce que**
ledit nombre minimal d'intervalles de temps (TS) est ajusté sur la base du taux d'arrivée (AR) estimé.

**FIG.1** PRIOR ART

GPRS NETWORK ARCHITECTURE

SUBSCRIBER TERMINAL (SS) ◄──────► NETWORK SIDE (NS)

SYS

GSM

MS · Um

EIR

Gf
Gf · HLR ···· AUC

MSC ·········· PSTN

BTS

ABIS · A · Gs · Gr

BSC · Gb · SGSN · Gn

IP BACKBONE NETWORK · GGSN · Gi · IP NETWORK

GPRS

GGSN · X.25 NETWORK

CIRCUIT SWITCHED -------- PACKET SWITCHED ────── SIGNALING ············

EP 1 269 690 B1

*FIG.2* PRIOR ART
GPRS PROTOCOL STRUCTURE

SUBSCRIBER
TERMINAL SIDE ◄──────────► NETWORK SIDE
(SS) (NS)

| APPLICATION |
|---|

| IP/X.25 | | IP/X.25 |
|---|---|---|

| SNDCP | | SNDCP | GTP | | GTP |
|---|---|---|---|---|---|

| LLC | | LLC | UDP/TCP | | UDP/TCP |
|---|---|---|---|---|---|

| RLC | RELAY | BSSGP | IP | | IP |
| | RCL | | | | |

| MAC | LC | MAC | NETWORK SERVICE | NETWORK SERVICE | L2 | | L2 |

| GSMRF | | GSMRF | L1 BIS | L1 BIS | L1 | | L1 |

MS  Um  BSS  Gb  SGSN  Gn  GGSN  Gi

▨ SCOPE OF GPRS

EP 1 269 690 B1

## FIG.4a PRIOR ART
SCHEMATIC EXAMPLE OF TBF HANDLING PROBLEM

TRANSMITTER
(RCL)QUEUE
TR-QUE

ARRIVAL RATE 1 PACKET/30ms

REMOVAL RATE VARYING AND
POTENTIALLY > 1 PACKET/30ms

| DP1 | DP2 | DP3 | · · | · | DPn |

IF NO PACKETS IN THE QUEUE,
THE TBF IS RELEASED

## FIG.3 PRIOR ART

SUBSCRIBER TERMINAL SIDE ←——————→ NETWORK SIDE

| TR-QUE |
| QUE-MON |
| CV-SET |
| SS-TR |
| UP-ACK |

RTA

LC(TBF)

UL/DL

| TR-QUE |
| QUE-MON |
| FBI-SET |
| NS-TR |
| SCH-RES |

MS

EP 1 269 690 B1

# FIG.4b RPIOR ART
## G.723.1 TYPICAL TRAFFIC SHAPE

ACTIVE PERIOD
AP

SILENCE PERIOD
SP

SIDE FRAME

BITRATE

5.3/6.3
kbit/s

EP 1 269 690 B1

## *FIG.4c* PRIOR ART

NORMAL RESOURCE ASSIGNMENT RESULTING INTO UNNECESSARY TBF RELEASE

MS
SENDER QUEUE
TR-QUE

MOBILE STATION
WITH MULTISLOT
CLASS 2

NETWORK SIDE
NS

ST4c1

2TS ASSIGNED — ST4c2

RLC/MAC DATA BLOCK
CV=2(FIRST PDU)/CV=1 (SECOND PDU) — ST4c3

2TS ASSIGNED — ST4c4

RCL/MAC DATA BLOCK
CV=1(BOTH PDUs) — ST4c5

2TS ASSIGNED — ST4c6 ($\triangleq$ST5a1)

RCL/MAC DATA BLOCK
CV=0

PACKET UPLINK ACK/NACK
FINAL ACK INDICATOR=1 — ST5a2

RELEASE TBF
MOBILE SIDE

PACKET CONTROL ACK

RELEASE TBF
NETWORK SIDE

ST5a3

30ms
30ms
30ms

THIS PACKET IS SENT WITH
THE NEXT TBF

EP 1 269 690 B1

# *FIG.5* PRIOR ART
## RELEASE OF AN UPLINK TBF

MOBILE STATION
SIDE

NETWORK
SIDE

ST5a1
RCL/MAC DATA BLOCK
CV=0

ST5a2
PACKET UPLINK ACK/NACK
FINAL ACK INDICATOR=1

ST5a3
PACKET CONTROL ACK

RELEASE TBF
MOBILE SIDE

RELEASE TBF
NETWORK SIDE

# FIG.6
## PRINCIPLE OF THE INVENTION

**SYS**

SUBSCRIBER TERMINAL SIDE ⟵⟶ NETWORK SIDE NS

RTA

| TR-QUE |
| QUE-MON |
| CV-SET |
| SS-TR |
| UP-ACK |

LC(TBF),

UL/DL,

| TR-QUE |
| QUE-MON |
| FBI-SET |
| NS-TR |
| SCH-RES  DE/IN/CST |
| LC-MAIN |
| LC-TERM |
| NS-RC |
| AR-EST |
| CV-VAL |

~NC

EP 1 269 690 B1

# FIG.7

### PRINCIPLE OF THE INVENTION

```
              ┌──────────┐
              │  START   │
              └──────────┘
                   │
                   ▼
        ┌─────────────────────┐
        │    DETERMINE CV     │
        │  ON SUBSCRIBER SIDE │────── ST71
        └─────────────────────┘
                   │
                   ▼
        ┌─────────────────────┐
        │ TRANSMIT CV IN COMB.WITH │
        │ DP TO NS USING THE CURRENTLY │── ST72
        │   ASSIGNED RESOURCES │
        └─────────────────────┘
                   │
                   ▼
        ┌─────────────────────┐
        │   RECEIVE CV IN NS  │
        │   TOGETHER WITH DP  │────── ST73
        └─────────────────────┘
                   │
                   ▼
        ┌─────────────────────┐
        │     DETERMINE       │
        │ RESOURCES FOR NEXT FRAME │── ST74
        └─────────────────────┘
                   │
                   ▼
        ┌─────────────────────┐
        │ ASSIGN RESOURCES FOR│
        │ THE NEXT FRAME TRANSMISSION │── ST75
        └─────────────────────┘
```

# FIG.8

```
            ┌──────────────────────┐
            │      STEP ST74        ╲
            └──────────┬───────────╱
                       │
                       ▼
            ┌──────────────────────┐
            │    READ CV VALUES     │─── ST81
            │ FROM ALL DATA PACKETS │
            └──────────┬───────────┘
                       │
     ST82              ▼                                    ST83
            ◇──────────────────◇   YES        ┌──────────────┐
            ╱     AT LEAST      ╲────────────▶│     TBF      │────┐
            ╲     ONE CV=0      ╱ (EMPTY QUEUE)│   RELEASE    │    │
            ◇─────────┬────────◇               └──────────────┘    │
                      │ NO                                         │
     ST82'            ▼                                   ST83'    │
            ◇──────────────────◇  NO (ALL CV>1) ┌──────────────┐  │
            ╱     AT LEAST      ╲───────────────▶│   ASSIGN     │──┤
            ╲     ONE CV=1      ╱                │ MAX.NO. TS   │  │
            ◇─────────┬────────◇                └──────────────┘  │
                      │ YES                                       │
     ST82"            ▼                                   ST83"   │
            ◇──────────────────◇   YES         ┌──────────────┐  │
            ╱     AT LEAST      ╲──────────────▶│   ASSIGN     │──┤
            ╲     ONE CV>1      ╱               │    NTS-      │  │
            ◇─────────┬────────◇               │  NO.(CV=1)   │  │
                      │ NO                      └──────────────┘  │
                      ▼                                           │
            ┌──────────────────────┐                             │
            │   ASSIGN MINIMUM      │─── ST84                     │
            │  NUMBER (e.g. ONE)    │                             │
            │       OF TS          │                             │
            └──────────┬───────────┘                             │
                       │          ┌── ST85                       │
                       ▼                                          │
            ╲──────────────────────┐                             │
             ╲        END          │◀────────────────────────────┘
            ╱──────────────────────┘
```

MOBILE STATION                                    BSS          *FIG.9*

→ □
                                        150ms
FIRST PACKET TRIGGERS              TBF ESTABLISHMENT        } ST91
  TBF ESTABLISHMENT                      2 TS
                                   ←─────────────
                                      2 PACKETS
                                   ─────────────→
     8 PACKETS                      CV=4; CV=3
 IN QUEUE AFTER TBF                                        } ST92
ESTABLISHMENT COMPLETED                 2 TS
                                   ←─────────────

     7 PACKETS                        2 PACKETS
 (8-2 TRANSMITTED)                 ─────────────→
    + 1 NEW                         CV=3; CV=3             } ST93
                                        2 TS
                                   ←─────────────

          ⋮                             ⋮

                                        2 TS
                                   ←─────────────
     4 PACKETS                        2 PACKETS
                                   ─────────────→
                                    CV=2; CV=1
                                                          } ST94  ←──── DECREASE RESOURCE
                                        1 TS
                                   ←─────────────
     3 PACKETS                        1 PACKET
                                   ─────────────→
                                       CV=1
                                                          } ST95
     3 PACKETS                       1 TS ─────
                                   ←─────────────
                                      1 PACKET
                                   ─────────────→
                                       CV=1
                                                          } ST96
     3 PACKETS
                                    ⋮  STEADY STATE

# FIG.10

MS                                                    BSS

⋮
⎫
⎬ ST100
⎭

3 PACKETS ←——————— 1 TS ———————

——————— CV=1 ———————→        ⎫
⎬ ST101
——————— 1 TS ———————←        ⎭

2 PACKETS

——————— CV=1 ———————→        ⎫
⎬ ST102
——————— 1 TS ———————←        ⎭

1 PACKET

——————— CV=0 ———————→        ⎫
⎬ ST103
⋮

——→ TBF RELEASE IN ACCORDANCE WITH FIG.5

# FIG.11

# FIG.12

MS
SENDER QUEUE
TR-QUE

MOBILE STATION
WITH MULTISLOT
CAPABILITY 4

NETWORK SIDE
NS

30ms

4TS ASSIGNED

4 RLC/MAC DATA BLOCKS
(CV=2(FIRST PDU)/CV=1(SECOND,3.,4-.PDU)

1TS ASSIGNED

1 RLC/MAC DATA BLOCKS
CV=1

1TS

1 RLC/MAC DATA BLOCKS
CV=1

1TS

1 RLC/MAC DATA BLOCKS
CV=1

PACKET UPLINK ACK/NACK
FINAL ACK INDICATOR=1

RELEASE TBF
MOBILE SIDE

RELEASE TBF
NETWORK SIDE

PACKET CONTROL ACK

EP 1 269 690 B1

# FIG.13

MS
SENDER QUEUE
TR-QUE

MOBILE STATION SIDE
WITH MULTISLOT
CLASS 1

NETWORK SIDE
NS

30ms

1TS ASSIGNED

1 RLC/MAC DATA BLOCKS
CV=2

1TS ASSIGNED

1 RLC/MAC DATA BLOCKS
CV=1

OTS

1TS

1 RLC/MAC DATA BLOCKS
CV=1

OTS

30ms

NO CONSECUTIVE
PDU

1TS

1 RLC/MAC DATA BLOCKS
CV=0

THE REMOVAL RATE OF
RCL QUEUE IS ASSUMED TO BE
HIGHER THAN THE ARRIVAL RATE

PACKET UPLINK ACK/NACK
FINAL ACK INDICATOR=1

RELEASE TBF
MOBILE SIDE

PACKET CONTROL ACK

RELEASE TBF
NETWORK SIDE

EP 1 269 690 B1

# FIG.14a

EXAMPLE: CAP. = 3

☐ 1ˢᵗ PACKET

150 MS FOR
TBF ESTABLISHMENT

⎫
⎬ ST14a1
⎭

← 3 TS

8 PACKETS

CV=3; CV=2; CV=2 →

⎫
⎬ ST14a2
⎭

← 3 TS

6 PACKETS
(8-3+1NEW)

CV=2; CV=2; CV=1 →

⎫
⎬ ST14a3
⎭

← 1 TS

4 PACKETS

CV=1 →

⎫
⎬ ST14a4
⎭

# FIG.14b

| | TBF | |
|---|---|---|
| | | ST14b1 |
| | 3 TS ← | |
| 8 PACKETS | | |
| | → CV=3; CV=2; CV=2 | ST14b2 |
| | 3 TS ← | |
| 6 PACKETS | | |
| | → CV=2; CV=2; CV=1 | ST14b3 |
| | TS=3-1=2 ← | |
| 4 PACKETS | | |
| | → CV=1; CV=1 | ST14b4 |
| | 1 TS ← | |
| 3 PACKETS | | |
| | → CV=1 | ST14b5 |

(MULTISLOT CAPABILITY 1)

MS          TR-QUE                                    NS                    *FIG.15*

0ms ─┬─      □  □  □          ◄──── 1TS ⟋ST151

                              ──── CV=2 ⟍ST152

10ms ─┼─  ■ ──► □  □

                              ◄──── 1TS ⟋ST153
20ms ─┼─     □  □  □
                              ──── CV=2 ⟍ST154

30ms ─┼─                                            T: (MEASUREMENT TIME) = 60ms
                                                    Pan: (STARTING VALUE): CV=2
                              ◄──── 1TS ⟋ST155      Pen: (END VALUE): CV=1
                                                    NATS: (NUMBER OF ASSIGNED
40ms ─┼─        □  □                                      TIME SLOTS) TS=3
                              ──── CV=1 ⟍ST156            (≙NUMBER OF TRANSMITTED
                                                          PACKETS)
50ms ─┼─  ■ ──► □

                              ◄──── 1TS ⟋ST157
60ms ─┼─     □  □
                              ──── CV=1 ⟍ST158

         ⋮

  t

$$AR = \frac{Pen + NATS - Pan}{T}$$

EP 1 269 690 B1

**REFERENCES CITED IN THE DESCRIPTION**

**Patent documents cited in the description**

• WO 9935876 A

• EP 00106925 A